(19) Europäisches Patentamt / European Patent Office / Office européen des brevets

(11) **EP 3 295 212 B1**

(12) **FASCICULE DE BREVET EUROPEEN**

(45) Date de publication et mention de la délivrance du brevet:
**24.10.2018 Bulletin 2018/43**

(51) Int Cl.:
**G01S 15/89** [(2006.01)]     **G01S 7/52** [(2006.01)]

(21) Numéro de dépôt: **16726355.7**

(22) Date de dépôt: **03.05.2016**

(86) Numéro de dépôt international:
**PCT/FR2016/051036**

(87) Numéro de publication internationale:
**WO 2016/181054 (17.11.2016 Gazette 2016/46)**

(54) **PROCÉDÉ ET DISPOSITIF DE SONDAGE PAR PROPAGATION D'ONDES**

VERFAHREN UND VORRICHTUNG FÜR SONDIERUNG MITTELS WELLENAUSBREITUNG

METHOD AND DEVICE FOR PROBING BY WAVE PROPAGATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.05.2015 FR 1554258**

(43) Date de publication de la demande:
**21.03.2018 Bulletin 2018/12**

(73) Titulaires:
• **Electricité de France**
  **75008 Paris (FR)**
• **Centre National de la Recherche Scientifique (CNRS)**
  **75016 Paris (FR)**

(72) Inventeurs:
• **TROTTIER, Camille**
  **77130 Montereau Fault Yonne (FR)**
• **AUBRY, Alexandre**
  **94200 Ivry sur Seine (FR)**
• **DERODE, Arnaud**
  **75013 Paris (FR)**

(74) Mandataire: **Cabinet Plasseraud**
  **66, rue de la Chaussée d'Antin**
  **75440 Paris Cedex 09 (FR)**

(56) Documents cités:
**WO-A1-2010/001027**

• **ALEXANDRE AUBRY ET AL: "Random Matrix Theory Applied to Acoustic Backscattering and Imaging In Complex Media", PHYSICAL REVIEW LETTERS, vol. 102, no. 8, 1 février 2009 (2009-02-01), XP055254973, US ISSN: 0031-9007, DOI: 10.1103/PhysRevLett.102.084301**
• **AUBRY ALEXANDRE ET AL: "Detection and imaging in a random medium: A matrix method to overcome multiple scattering and aberration", JOURNAL OF APPLIED PHYSICS, AMERICAN INSTITUTE OF PHYSICS, US, vol. 106, no. 4, 18 août 2009 (2009-08-18) , pages 44903-44903, XP012123911, ISSN: 0021-8979, DOI: 10.1063/1.3200962**
• **SHAHJAHAN S ET AL: "A random matrix approach to detect defects in a strongly scattering polycrystal: How the memory effect can help overcome multiple scattering", APPLIED PHYSICS LETTERS, AMERICAN INSTITUTE OF PHYSICS, 2 HUNTINGTON QUADRANGLE, MELVILLE, NY 11747, vol. 104, no. 23, 9 juin 2014 (2014-06-09) , XP012186421, ISSN: 0003-6951, DOI: 10.1063/1.4882421 [extrait le 1901-01-01]**
• **AUBRY ALEXANDRE ET AL: "Multiple scattering of ultrasound in weakly inhomogeneous media: Application to human soft tissues", THE JOURNAL OF THE ACOUSTICAL SOCIETY OF AMERICA, AMERICAN INSTITUTE OF PHYSICS FOR THE ACOUSTICAL SOCIETY OF AMERICA, NEW YORK, NY, US, vol. 129, no. 1, 1 janvier 2011 (2011-01-01), pages 225-233, XP012136260, ISSN: 0001-4966, DOI: 10.1121/1.3506343**

**Description**

**DOMAINE TECHNIQUE**

La présente invention est relative aux procédés et dispositifs de sondage par propagation d'ondes.

**ETAT DE LA TECHNIQUE ANTERIEURE**

Le procédé de sondage par propagation d'ondes utilise un ensemble de transducteurs et permet par exemple de mesurer un paramètre caractéristique du milieu, et/ou de détecter un point singulier du milieu, et/ou de réaliser une image du milieu.

Les procédés de ce type sont utilisés notamment dans les systèmes de détection et d'imagerie, comme par exemple les sonars, les radars, les échographes etc.

Dans les procédés connus de ce type et notamment dans les procédés d'imagerie échographique ou radar, on utilise une composante de diffusion simple des signaux captés : si chaque diffuseur n'interagit qu'une seule fois avec l'onde, il y a en effet une équivalence directe entre le temps d'arrivée de chaque écho et la distance séparant le transducteur et le diffuseur ayant engendré cet écho. La détection d'un écho à un instant donné est le signe de la présence d'un diffuseur à la distance correspondant au temps d'arrivée de l'écho. Une image de la réflectivité du milieu, c'est-à-dire de la position des différents diffuseurs au sein du milieu, peut alors être le cas échéant construite à partir des signaux captés. La diffusion multiple est peu utilisée dans les méthodes d'imagerie échographiques ou radar. Ces méthodes d'imagerie reposent sur l'hypothèse que cette diffusion multiple est négligeable.

En présence d'une composante importante de diffusion multiple, notamment lorsque les diffuseurs contenus dans le milieu ont un pouvoir diffusant élevé et/ou sont très denses à l'intérieur du milieu, les méthodes d'imagerie classiques sont fortement perturbées et ne sont plus fiables. En effet, dans ce cas, il n'y a plus d'équivalence entre le temps d'arrivée d'un d'écho et la distance séparant un transducteur et un diffuseur du milieu, ce qui ne permet pas de bâtir une image du milieu.

La demande de brevet WO-2010/001027 propose alors un procédé de sondage capable de séparer la composante de diffusion multiple de la composante de diffusion simple. Plus particulièrement, le procédé de ce document comprend les étapes suivantes :

(a) une étape d'émission au cours de laquelle on fait émettre par un ensemble de transducteurs (c'est-à-dire par tout ou partie des transducteurs de l'ensemble) une onde incidente dans un milieu diffusant pour ladite onde,

(b) une étape de mesure au cours de laquelle on fait capter, par ledit ensemble de transducteurs (c'est-à-dire par tout ou partie des transducteurs de l'ensemble), des signaux représentatifs d'une onde réfléchie réverbérée par le milieu à partir de l'onde incidente, lesdits signaux captés comprenant :

- une composante de diffusion simple, représentative de trajets d'onde où l'onde réfléchie résulte d'une seule réflexion de l'onde incidente par chaque diffuseur du milieu,
- et le cas échéant une composante de diffusion multiple, représentative de trajets d'onde où l'onde réfléchie résulte de plusieurs réflexions successives de l'onde incidente sur les diffuseurs du milieu avant d'atteindre l'ensemble de transducteurs,

(c) une étape de traitement au cours de laquelle on traite lesdits signaux captés en vue de déterminer des caractéristiques du milieu (les caractéristiques en question peuvent consister en une image du milieu, et/ou une valeur d'un paramètre du milieu, et/ou la présence ou non d'un point singulier tel qu'une hétérogénéité, etc...), on extrait au moins une composante choisie parmi la composante de diffusion multiple et la composante de diffusion simple, par filtrage d'au moins une matrice de transfert fréquentielle représentative des réponses entre transducteurs de l'ensemble de transducteurs, et qui comprend au moins les sous-étapes suivantes :

(c1) une sous-étape de détermination de matrice de transfert fenêtrée au cours de laquelle on détermine au moins une matrice de transfert fréquentielle fenêtrée $K(T,f)$ correspondant à une matrice temporelle fenêtrée de réponse inter-éléments $K(T,t) = [k_{ij}(T,t)]$ (ou réponse entre transducteurs de l'ensemble), ladite matrice temporelle fenêtrée de réponse inter-éléments correspondant, sur une fenêtre temporelle voisine d'un temps $T$ et de durée $\Delta t$, aux réponses temporelles $h_{ij}(t)$ entre transducteurs de l'ensemble de transducteurs, $f$ étant la fréquence,

(c2) une sous-étape de rotation de données au cours de laquelle on calcule deux matrices $A1(T,f)$ et $A2(T,f)$ à partir de la matrice de transfert fréquentielle fenêtrée $K(T,f)$, par des rotations dans un premier sens et extraction de composantes de la matrice de transfert fréquentielle fenêtrée,

(c3) une sous-étape de filtrage au cours de laquelle on sépare la composante de diffusion multiple de la composante de diffusion simple dans chacune des matrices A1, A2, et on obtient ainsi au moins deux matrices filtrées A1$^F$, A2$^F$ correspondant respectivement aux matrices A1, A2 et représentatives chacune, soit de la composante de diffusion simple, soit de la composante de diffusion multiple,

(c4) une sous-étape de rotation de données de sens inverse au cours de laquelle on calcule une matrice de transfert fenêtrée filtrée K$^F$(T,f) à partir des deux matrices filtrées A1$^F$, A2$^F$, par des rotations dans un second sens inverse du premier sens et extraction de composantes des matrices filtrées A1$^F$, A2$^F$.

## EXPOSE DE L'INVENTION

La présente invention a notamment pour but de perfectionner et d'améliorer les procédés de sondage tels que définis ci-dessus.

A cet effet, l'étape de traitement du procédé selon l'invention est de telle sorte que :

- au cours de l'étape de rotation de données (c2), toutes les composantes de la matrice de transfert fréquentielle fenêtrée K(T,f) sont réparties dans une partie centrale de l'une ou l'autre des deux matrices A1(T,f) et A2(T,f), ces matrices ayant dans une partie externe à la partie centrale des valeurs nulles, et
- au cours de l'étape de rotation de données de sens inverse (c4), toutes les composantes non nulles des parties centrales des matrices filtrées A1$^F$, A2$^F$ sont extraites et mises dans la matrice de transfert fenêtrée filtrée K$^F$(T,f).

Grâce à ces dispositions du procédé selon l'invention, un plus grand nombre de d'informations provenant du milieu peuvent être prises en compte dans l'étape de traitement. Ainsi, le sondage du milieu par propagation d'ondes est plus efficace, et permet de sonder le milieu sur une plus grande profondeur.

En outre, les images que l'on peut produire du milieu auront une meilleure résolution spatiale. Eventuellement, on pourra utiliser un ensemble de transducteurs ayant un nombre inférieur de transducteurs, et donc le procédé sera moins coûteux.

En outre, la séparation des composantes permet par exemple :

- de bâtir une image du milieu en utilisant uniquement la composante de diffusion simple, ou
- de déterminer un paramètre caractéristique du milieu à partir de la composante de diffusion multiple, ou
- de déterminer que la diffusion multiple est faible ou nulle, ce qui permet aussi de caractériser le milieu.

Dans divers modes de réalisation du procédé selon l'invention, on peut éventuellement avoir recours en outre à l'une et/ou à l'autre des dispositions suivantes.

Selon un aspect du procédé, la matrice de transfert fenêtrée K(T,f) est une matrice de dimension N*N, N étant impair, et au cour de l'étape de rotation de données (c2), on calcule les deux matrices A1(T,f)=[a1$_{uv}$(T,f)] et A2=[a2$_{uv}$(T,f)] à partir de la matrice de transfert fréquentielle fenêtrée K(T,f)=[k$_{ij}$(T,f)], par les relations suivantes :
- si u+v-1-(N-1)/2 et v-u+(N+3)/2-1 sont tous deux compris entre 1 et N, inclus,

$$\text{alors} \quad a1_{uv}(T,f) = k_{u+v-1-(N-1)/2, \, v-u+(N+3)/2-1}(T,f),$$
$$\text{sinon} \quad a1_{uv}(T,f) = 0, \text{ et}$$

- si u+v-(N-1)/2 et v-u+(N+3)/2-1 sont tous deux compris entre 1 et N-1, inclus,

$$\text{alors} \quad a2_{uv}(T,f) = k_{u+v-(N-1)/2, \, v-u+(N+3)/2-1}(T,f),$$
$$\text{sinon} \quad a2_{uv}(T,f) = 0.$$

Selon un aspect du procédé, la sous-étape de rotation des données (c2) comprend :

- une première sous-étape (c21) au cours de laquelle la matrice de transfert fréquentielle fenêtrée K(T,f) est introduite à l'intérieur d'une matrice étendue Ke(T,f) de plus grande taille, tous les éléments de la matrice étendue autres que ceux provenant de la matrice de transfert fréquentielle fenêtrée étant nuls, et
- une seconde sous-étape (c22) au cours de laquelle on calcule les deux matrices A1(T,f) et A2(T,f) à partir de la matrice étendue Ke(T,f).

Selon un aspect du procédé, la matrice de transfert fenêtrée K(T,f) est une matrice de dimension N*N, N étant impair, et :
- au cours de la première sous-étape (c21), la matrice étendue Ke(T,f)=[ke$_{ij}$(T,f)] est définie par :

$$si \quad i \in [1+(N-1)/2 \; ; N+(N-1)/2], \; et$$
$$j \in [1+(N-1)/2 \; ; N+(N-1)/2]$$
$$alors \quad ke_{ij}(T,f) = k_{i-(N-i)/2, \; j-(N-1)/2}(T,f),$$
$$sinon \quad ke_{ij}(T,f) = 0, \; et$$

- au cours de la seconde sous-étape (c22), les deux matrices A1(T,f)=[a1$_{uv}$(T,f)], A2(T,f)=[a2$_{uv}$(T,f)], sont calculées par les relations suivantes :

$$a1_{uv}(T,f) = ke_{u+v-1, \; v-u+(N+3)/2-1+(N-1)/2}(T,f), \; et$$
$$a2_{uv}(T,f) = ke_{u+v, \; v-u+(N+3)/2-1+(N-1)/2}(T,f).$$

Selon un aspect du procédé, la matrice de transfert fenêtrée K(T,f) est une matrice de dimension N*N, N étant impair, et au cour de l'étape de rotation de données de sens inverse (c4), on calcule la matrice de transfert fenêtrée filtrée K$^F$(T,f)=[k$^F_{ij}$(T,f)] à partir des matrices filtrées A1$^F$(T,f)=[a1$^F_{uv}$(T,f)], A2$^F$(T,f)=[a2$^F_{uv}$(T,f)] par les relations suivantes : si i-j est pair,

$$alors \quad k^F_{ij}(T,f) = a1^F_{(i-j)/2+(N+1)/2, \; (i+j)/2},$$
$$sinon \quad k^F_{ij}(T,f) = a2^F_{(i-j-1)/2+(N+1)/2, \; (i+j-1)/2}.$$

Selon un aspect du procédé, au cours de la sous-étape de détermination de la matrice de transfert fenêtrée (c1), on détermine chaque matrice de transfert fréquentielle fenêtrée K(T,f) par transformée en ondelette de la matrice temporelle fenêtrée K(T,t) correspondant, sur ladite fenêtre temporelle voisine du temps T et de durée Δt, aux réponses temporelles h$_{ij}$(t) entre transducteurs de l'ensemble de transducteurs.
Selon un aspect du procédé, les fenêtres temporelles des différentes matrices de transfert fenêtrées K(T,f) se chevauchent au moins deux à deux.
Selon un aspect du procédé, au cours de la sous-étape de filtrage (c3) :

- on extrait une composante de diffusion simple k$^s_{ij}$(T,f) de chaque coefficient k$_{ij}$(T,f) de la matrice K(T,f), telle que les composantes de diffusion simple k$^s_{ij}$(T,f) soient cohérentes entre elles sur chaque antidiagonale de ladite matrice K(T,f), et
- on extrait une composante de diffusion multiple k$^M_{ij}$(T,f) de chaque coefficient k$_{ij}$(T,f) de la matrice K(T,f).

Selon un aspect du procédé, au cours de l'étape d'émission l'onde incidente émise dans un milieu est inclinée d'un angle prédéterminé avec une surface externe dudit milieu.
Par ailleurs, l'invention a également pour objet un dispositif pour la mise en oeuvre d'un procédé de sondage tel que défini ci-dessus, comprenant un ensemble de transducteurs adaptés pour émettre une onde incidente dans un milieu diffusant et pour capter des signaux représentatifs d'une onde réfléchie réverbérée par le milieu à partir de l'onde incidente, lesdits signaux captés comprenant :

- une composante de diffusion simple, représentative de trajets d'onde où l'onde réfléchie résulte d'une seule réflexion de l'onde incidente par chaque diffuseur du milieu,
- et le cas échéant une composante de diffusion multiple, représentative de trajets d'onde où l'onde réfléchie résulte de plusieurs réflexions successives de l'onde incidente sur les diffuseurs du milieu avant d'atteindre l'ensemble de transducteurs,

ledit dispositif comportant en outre des moyens de traitement adaptés pour traiter lesdits signaux captés en vue de déterminer des caractéristiques du milieu,
les moyens de traitement sont adaptés pour extraire au moins une composante choisie parmi la composante de diffusion multiple et la composante de diffusion simple, par filtrage d'au moins une matrice de transfert fréquentielle représentative des réponses entre transducteurs de l'ensemble de transducteurs, et les moyens de traitement effectuent au moins les sous-étapes suivantes :

(c1) une sous-étape de détermination de matrice de transfert fenêtrée au cours de laquelle on détermine au moins une matrice de transfert fréquentielle fenêtrée K(T,f) correspondant à une matrice temporelle fenêtrée de réponse inter-éléments K(T,t)=[k$_{ij}$(T,t)], ladite matrice temporelle fenêtrée de réponse inter-éléments correspondant, sur une fenêtre temporelle voisine d'un temps T et de durée $\Delta$t, aux réponses temporelles h$_{ij}$(t) entre transducteurs de l'ensemble de transducteurs, f étant la fréquence,

(c2) une sous-étape de rotation de données au cours de laquelle on calcule deux matrices A1(T,f) et A2(T,f) à partir de la matrice de transfert fréquentielle fenêtrée K(T,f), par des rotations dans un premier sens et extraction de composantes de la matrice de transfert fréquentielle fenêtrée,

(c3) une sous-étape de filtrage au cours de laquelle on sépare la composante de diffusion multiple de la composante de diffusion simple dans chacune des matrices A1, A2, et on obtient ainsi au moins deux matrices filtrées A1$^{F}$, A2$^{F}$, correspondant respectivement aux matrices A1, A2 et représentatives chacune, soit de la composante de diffusion simple, soit de la composante de diffusion multiple,

(c4) une sous-étape de rotation de données de sens inverse au cours de laquelle on calcule une matrice de transfert fenêtrée filtré K$^{F}$(T,f) à partir des deux matrices filtrées A1$^{F}$, A2$^{F}$, par des rotations dans un second sens inverse du premier sens et extraction de composantes des matrices filtrées A1$^{F}$, A2$^{F}$.

Le dispositif selon l'invention est tel que les moyens de traitement sont adaptés pour que :

- au cours de l'étape de rotation de données (c2) toutes les composantes de la matrice de transfert fréquentielle fenêtrée K(T,f) sont réparties dans une partie centrale de l'une ou l'autre des deux matrices A1(T,f) et A2(T,f), ces matrices ayant dans une partie externe à la partie centrale des valeurs nulles, et
- au cours de l'étape de rotation de données de sens inverse (c4) toutes les composantes non nulles des parties centrales des matrices filtrées A1$^{F}$, A2$^{F}$ sont extraites et mises dans matrice de transfert fenêtrée filtré K$^{F}$(T,f).

## BREVE DESCRIPTION DES DESSINS

D'autres caractéristiques et avantages de l'invention apparaîtront au cours de la description suivante de plusieurs de ses modes de réalisation, donnés à titre d'exemples non limitatifs, en regard des dessins joints.

Sur les dessins :

- la figure 1 est une vue schématique d'un dispositif pour la mise en oeuvre d'un procédé selon un mode de réalisation de l'invention,
- la figure 2 est un schéma représentant deux chemins de diffusion simple contribuant au champ rétrodiffusé par le milieu sondé au temps T=2R/c dans l'exemple de la figure 1,
- la figure 3 est un schéma représentant deux chemins de diffusion multiple contribuant au champ rétrodiffusé par le milieu sondé au temps T=2R/c dans l'exemple de la figure 1,
- les figures 4 et 5 illustrent une sous-étape de rotation de données appartenant à un mode de réalisation du procédé selon l'art antérieur, au cours de laquelle on extrait deux matrices A1 et A2 de chaque matrice fréquentielle de transfert fenêtrée K,
- la figure 6 illustre une sous-étape de rotation de données de sens inverse au cours de laquelle on détermine une matrice de transfert filtrée K$^{F}$ à partir des matrices A1 et A2 susmentionnées, après filtrage desdites matrices,
- la figure 7 illustre un processus itératif utilisable pour le filtrage des matrices A1 et A2 par décomposition en valeurs singulières,
- la figure 8 illustre un exemple de matrice étendue Ke selon un premier mode de réalisation de l'invention,
- les figures 9 et 10 montrent les deux matrices A1 et A2 obtenues à partir de la matrice étendue du premier mode de réalisation de la figure 8, ou obtenues directement selon un deuxième mode de réalisation de l'invention à partir de la matrice fréquentielle de transfert fenêtrée K,
- les figures 11a, 11b et 11c illustrent trois exemples de fonction ondelette mère utilisables dans le procédé selon l'invention pour former la matrice fréquentielle de transfert fenêtrée K, et
- la figure 12 est une vue schématique d'une variante du dispositif ayant un ensemble de transducteurs inclinés par rapport à une surface externe du milieu et adapté pour la mise en oeuvre d'un mode de réalisation d'un procédé selon l'invention.

## DESCRIPTION DETAILLEE DE MODES DE REALISATION

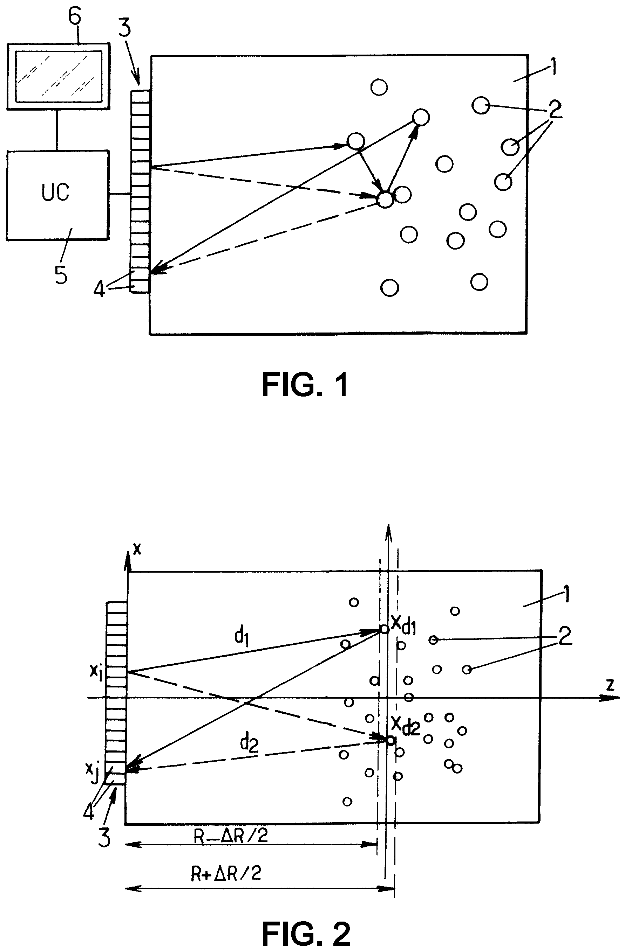

**La figure 1** montre un exemple de dispositif adapté pour sonder un milieu 1 par émission et réception d'ondes. L'invention sera décrite plus particulièrement ci-après dans le cas où les ondes en question sont des ondes ultrasonores (par exemple de fréquences comprises entre 2 et 4 MHz), mais l'invention est également applicable à des ondes de toute nature, par exemple des ondes mécaniques autres que des ondes ultrasonores de compression, des ondes électromagnétiques, ou autres.

Le milieu 1 est diffusant pour les ondes considérées, c'est-à-dire qu'il est hétérogène et/ou contient des diffuseurs 2 répartis de manière aléatoire et capables de réfléchir les ondes émises dans le milieu 1.

Le milieu 1 en question peut être par exemple une partie du corps humain, et les diffuseurs 2 peuvent être notamment des particules de petite taille, non résolues, contenues dans le milieu 1 (en échographie de tels diffuseurs engendrent des images dites de «speckle»). Bien entendu, le milieu 1 à sonder pourrait être autre, par exemple une partie d'un objet industriel dont on souhaite contrôler la structure dans le cadre d'un contrôle non destructif.

Le dispositif de sondage représenté sur la figure 1 comporte un ensemble 3 de transducteurs 4, par exemple un réseau linéaire de transducteurs ultrasonores pouvant se présenter classiquement sous la forme d'une barrette rigide mise en contact avec le milieu 1. Cet ensemble 3 comporte un nombre N de transducteurs, N pouvant par exemple être compris entre 100 et 500. On peut par exemple utiliser une barrette d'une centaine de transducteurs 4 ayant chacun une largeur d'environ de largeur 0.39 mm. On notera que les transducteurs 4 sont ici des transducteurs ultrasonores capables de transformer un signal électrique en ondes ultrasonores de compression ou inversement, mais au sens du présent brevet, on appellera transducteur plus généralement tout dispositif capable de transformer un signal électrique en une onde de quelque nature que ce soit (onde mécanique, onde électromagnétique, etc.) et inversement.

Chaque transducteur 4 de l'ensemble 3 peut être commandé individuellement par une unité centrale 5 (UC) comprenant par exemple des moyens des moyens numériques de traitement de signaux, cette unité centrale 5 pouvant par exemple être adaptée pour présenter une image du milieu 1 sur un écran 6.

Pour sonder le milieu 1, l'unité centrale 5 envoie aux transducteurs 4 des signaux électriques qui sont transformés par lesdits transducteurs en ondes émises dans le milieu 1, en l'occurrence des ondes ultrasonores de compression, et ces ondes sont partiellement réfléchies par les diffuseurs 2 contenus dans le milieu. Une partie des ondes diffusées (ou échos) revient ainsi vers les transducteurs 4 qui les captent et les transforment en signaux électriques de réception traités ensuite par l'unité centrale 5.

Ces ondes reviennent vers les transducteurs 4 :

- soit après avoir été réfléchies une seule fois par les diffuseurs 2 (par exemple selon le trajet schématisé en traits pointillés sur la figure 1), c'est à dire après avoir subi une diffusion simple,
- soit après avoir été réfléchies successivement sur plusieurs diffuseurs 2 (par exemple selon le trajet schématisé en trait plein sur la figure 1), c'est-à-dire après avoir subi une diffusion multiple.

L'onde totale diffusée par le milieu 1 et renvoyée vers les transducteurs 4, comprend donc deux contributions :

- une contribution dite «de diffusion simple», correspondant aux cas où l'onde incidente ne subit qu'une seule réflexion par chaque diffuseur 2 du milieu 1 avant de revenir vers les transducteurs 4,
- une contribution dite «de diffusion multiple», correspondant aux cas où l'onde incidente subit plusieurs réflexions successives sur les diffuseurs 2 du milieu avant d'atteindre les transducteurs 4.

Le présent procédé permet de séparer ces deux contributions par filtrage, afin d'utiliser seulement l'une d'entre elle ou de les traiter séparément. Par exemple :

- la contribution de diffusion simple est utile pour construire une image du milieu, notamment par échographie dans le cas décrit ici (mais il pourrait s'agir aussi d'une image sismographique dans le cas d'ondes sismiques, ou une image radar dans le cas d'ondes électromagnétiques, ou autres) : en effet, puisque chaque diffuseur 2 n'interagit qu'une seule fois avec l'onde incidente, il y a une équivalence directe entre le temps d'arrivée de chaque écho et la distance séparant le capteur et le diffuseur ayant engendré cet écho. La détection d'un signal écho à un instant donné est le signe de la présence d'un diffuseur 2 à la distance correspondant au temps d'arrivée de l'écho. Une image de la réflectivité du milieu, c'est-à-dire de la position des différentes cibles diffusantes au sein du milieu, peut alors être construite à partir des signaux enregistrés ;
- la contribution de diffusion multiple peut également être utile à des fins de caractérisation des milieux désordonnés, car elle permet de mesurer des paramètres statistiques comme le libre parcours moyen ou le coefficient de diffusion d'une onde se propageant à travers un milieu aléatoire ; l'importance relative de cette contribution de diffusion multiple permet également de caractériser la fiabilité d'une image du milieu 1, obtenue par exemple par échographie.

Afin de séparer les contributions de diffusion simple et de diffusion multiple, on enregistre tout d'abord les réponses inter-éléments de chaque paire de transducteurs 4 de l'ensemble 3.

A cet effet, comme représenté sur la **figure 2,** une onde incidente correspondant à un signal impulsionnel est envoyée depuis chaque transducteur n°*i* de l'ensemble 3 (d'abscisse $x_i$) au cours d'une **étape d'émission (a)** et l'onde rétrodiffusée (réverbérée) par le milieu suite à l'émission de cette onde incidente, est enregistrée par chaque transducteur n°*j* (d'abscisse x$_j$) au cours d'une **étape de mesure (b).** Au cours de cette opération, chaque transducteur j capte un signal temporel h$_{ij}$(t) suite à une émission par le transducteur i. Cette opération est réalisée pour tous les couples émetteurs/récepteurs possibles de l'ensemble 3, c'est-à-dire en pratique pour tous les couples de transducteurs 4.

L'ensemble des *N²* réponses forme une matrice temporelle de réponse inter-éléments H(t)=[h$_{ij}$(t)] matrice carrée de dimension N*N, qui est la réponse globale du milieu 1. On notera que la matrice temporelle de réponse inter-éléments H(t) peut éventuellement être acquise plus rapidement, sans faire émettre un signal impulsionnel successivement par chaque transducteur i de l'ensemble 3, en procédant par exemple comme enseigné dans le document WO-A-2004/086557.

Les signaux h$_{ij}$(t) sont numérisés (par exemple sur 9 bits, ou autre), échantillonnés (par exemple avec un échantillonnage à 20 MHz pour des ondes ultrasonores) et enregistrés par l'unité centrale 5.

L'unité centrale 5 procède ensuite à une **étape de traitement (c),** comprenant une **sous-étape initiale (c1) de détermination de matrice de transfert fenêtrée.**

Au cours de cette sous-étape (c1), chaque réponse impulsionnelle h$_{ij}$(t) est d'abord tronquée (fenêtrée) en fenêtres de temps successives, de durée Δt.

On obtient ainsi une série de matrices temporelles fenêtrées K(T,t)=[k$_{ij}$(T,t)] de dimension N*N, où k$_{ij}$(T,t) est la contribution à h$_{ij}$(t) correspondant à la fenêtre de temps [T-Δt/2 ; T+Δt/2], soit :

$$k_{ij}(T,t) = h_{ij}(t) \times W_R(t - T) \qquad (1)$$

avec :

- $W_R(t)$=1 pour $t \in$[-Δ*t*/2;+Δ*t*/2] et $W_R(t)$=0 partout ailleurs,
- R=c.T/2 est une distance mesurée depuis l'ensemble 3 de transducteurs (voir la figure 2), selon un axe z perpendiculaire à la direction longitudinale x dudit ensemble de transducteurs (constituant un réseau linéaire dans l'exemple considéré ici),
- c est la célérité de l'onde dans le milieu 1 (soit dans le cas particulier des ultrasons dans l'eau ou dans des tissus mous du corps humain, c=1.5 mm/μs),
- Δt est une durée prédéterminée correspondant à une distance ΔR=c.Δt parcourue par l'onde, les intervalles de temps susmentionnés [T-Δt/2 ; T+Δt/2] pouvant avantageusement être jointifs, c'est-à-dire recouvrir entièrement une période de temps déterminée (autrement dit, le traitement effectué couvre une profondeur de champ, c'est-à-dire une plage de valeurs de R qui est également continue).

Au cours de la sous-étape (c1), on procède ensuite à une transformée de Fourier discrète des coefficients de la matrice K(T,t), pour obtenir ainsi pour chaque valeur de T, une matrice de transfert de dimension N*N que l'on appellera matrice de transfert fréquentielle fenêtrée K(T,f)=[k$_{ij}$(T,f)], où k$_{ij}$(T,f) est la transformée de Fourier discrète de k$_{ij}$(T,t) et f est la fréquence.

A partir de ces matrices de transfert fréquentielles fenêtrées K(T,f), on peut séparer les contributions de diffusion simple et multiple, par filtrage, au cours d'une **sous-étape ultérieure de filtrage (c3)** appartenant à l'étape de traitement (c).

En particulier, au cours de cette sous-étape ultérieure de filtrage (c3), on peut séparer la composante de diffusion multiple de la composante de diffusion simple dans chaque matrice de transfert fréquentielle fenêtrée K(T,f) en fonction de la cohérence des coefficients k$_{ij}$(T,f) de la matrice de transfert fréquentielle fenêtrée K(T,f) sur chaque antidiagonale de ladite matrice de transfert fréquentielle fenêtrée K(T,f) (on appelle antidiagonale un alignement de coefficients k$_{ij}$(T,f) de ladite matrice, tel que i+j soit constant).

En effet, les ondes simplement diffusées présentent une cohérence particulière selon les antidiagonales de la matrice K(T,f) alors que les ondes multiplement diffusées ont un aspect aléatoire et ne présentent pas de direction de cohérence privilégiée dans ladite matrice K(T,f). En filtrant judicieusement ces antidiagonales, les deux contributions peuvent ainsi être séparées.

Cette propriété peut être expliquée comme suit.

Chacune des réponses impulsionnelles *h$_{ij}$(t)* peut se décomposer sous la forme suivante :

$$h_{ij}(t) = h_{ij}^S(t) + h_{ij}^M(t) \qquad (2)$$

où $h_{ij}^{S}(t)$ et $h_{ij}^{M}(t)$ correspondent respectivement aux signaux issus de la diffusion simple (S) et de la diffusion multiple (M).

De la même manière, les coefficients $k_{ij}(T,f)$ de la matrice de transfert fréquentielle fenêtrée K(T,f) peuvent se décomposer chacun sous la forme $k_{ij}(T,f) = k_{ij}^{S}(T,f) + k_{ij}^{M}(T,f)$, où $k_{ij}^{S}(T,f)$ est la contribution de diffusion simple et $k_{ij}^{M}(T,f)$ est la contribution de diffusion multiple.

Chaque contribution $k_{ij}^{S}(T,f)$ peut être considérée comme la somme d'ondes partielles associées à plusieurs chemins de diffusion simple dont deux exemples (chemins $d_1$ et $d_2$) sont représentés sur la figure 2. Les ondes simplement diffusées qui parviennent au réseau de capteurs dans la fenêtre de temps [T-$\Delta$t/2 ; T+$\Delta$t/2] correspondent à la réflexion de l'onde initiale sur des diffuseurs situés dans une zone du milieu d'épaisseur $\Delta$R=c.$\Delta$t, à la profondeur R=cT/2.

On parle de «volume isochrone» pour désigner l'ensemble des points qui, à un instant T donné, contribuent au signal capté sur le réseau. En réalité, le volume isochrone n'est pas exactement une tranche parallèle à la surface de la barrette mais résulte de la superposition d'ellipses ayant pour foyers l'élément émetteur (i) et l'élément récepteur (j). En champ lointain, c'est-à-dire lorsque R est suffisamment grand, on assimile le volume isochrone à une tranche d'épaisseur $\Delta R$ parallèle au réseau et distant de celui-ci de R=cT/2.

La réponse $k_{ij}^{S}$ entre les éléments $i$ et $j$ peut se décomposer en une somme d'ondes partielles issues de la réflexion sur les $N_d$ diffuseurs du volume isochrone. A deux dimensions, dans le cadre de l'approximation paraxiale, on peut écrire $k_{ij}^{S}(T,f)$ sous la forme suivante :

$$k_{ij}^{S}(T,f) = \frac{\exp(2jkR)}{R} \sum_{d=1}^{N_d} A_d \exp\left\{ j\frac{k}{2R}\left[ (x_i - X_d)^2 + (x_j - X_d)^2 \right] \right\} \qquad (3)$$

où l'entier d désigne le d$^{ème}$ chemin de diffusion simple contribuant au signal reçu au temps T, $X_d$ est la position transverse du diffuseur d *(selon l'axe X)*, k est le nombre d'onde dans le milieu ambiant (k=2$\pi$/$\lambda$, $\lambda$ étant la longueur d'onde) et $A_d$ est une amplitude caractérisant la réflectivité du diffuseur d.

On notera que dans l'équation (3) ci-dessus et dans les autres équations de la présente demande de brevet, j est le nombre imaginaire tel que $j^2$=-1 tant qu'il n'est pas en indice, mais désigne la position d'un élément de matrice lorsqu'il est en indice.

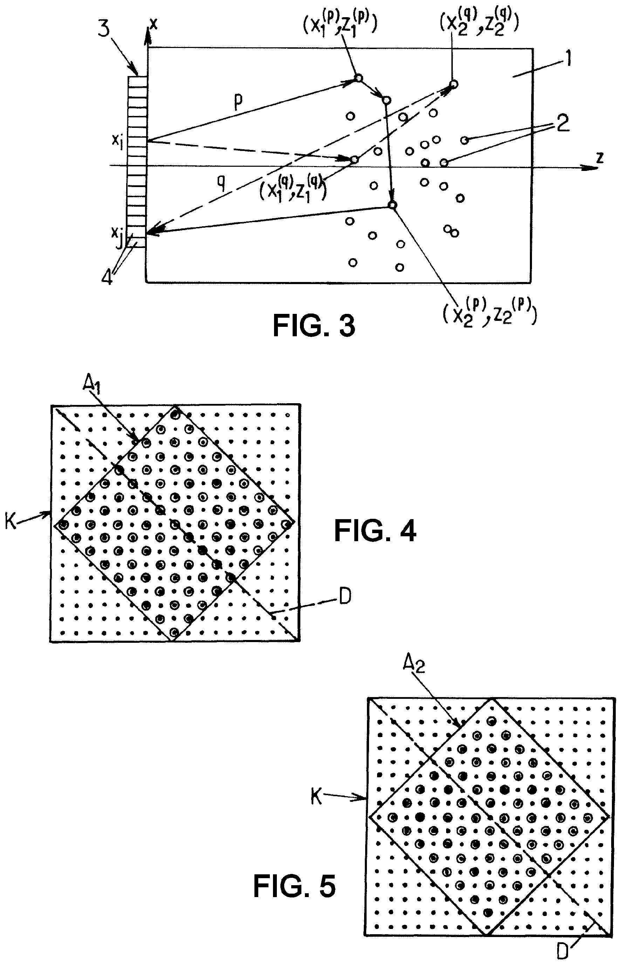

La contribution de diffusion multiple peut elle aussi se décomposer en ondes partielles correspondant à des chemins de diffusion multiple de longueur comprise dans l'intervalle [R-$\Delta$R/2 ; R+$\Delta$R/2], comme représenté sur la **figure 3** (pour deux chemins d'indices p et q).

On peut écrire $k_{ij}^{M}(T,f)$ sous la forme suivante :

$$k_{ij}^{M}(T,f) = \sum_{p=1}^{N_p} \frac{\exp\left[jk\left(Z_1^{(p)} + Z_2^{(p)}\right)\right]}{\sqrt{Z_1^{(p)}Z_2^{(p)}}} B_p \exp\left\{ j\frac{k}{2Z_1^{(p)}}\left(x_i - X_1^{(p)}\right)^2 \right\} \exp\left\{ j\frac{k}{2Z_2^{(p)}}\left(x_j - X_2^{(p)}\right)^2 \right\}$$

$$(4)$$

où l'entier $p$ désigne l'indice du chemin de diffusion multiple considéré. Les couples $\left(X_1^{(p)}, Z_1^{(p)}\right)$ et $\left(X_2^{(p)}, Z_2^{(p)}\right)$ désignent respectivement les coordonnées du premier et du dernier diffuseur du chemin $p$ dans l'exemple représenté sur la figure 3. $B_p$ correspond à l'amplitude complexe de l'onde partielle liée au chemin p, depuis le premier événement de diffusion $(X_1^{(p)}, Z_1^{(p)})$ jusqu'au dernier $(X_2^{(p)}, Z_2^{(p)})$.

Bien que la répartition des diffuseurs 2 dans le milieu 1 soit totalement aléatoire et sans corrélation entre diffuseurs, le signal associé à la diffusion simple $k_{ij}^S$ présente une cohérence particulière, contrairement à la contribution de diffusion multiple. En effet, l'équation (3) peut se réécrire sous la forme :

$$k_{ij}^S(T,f) = \underbrace{\frac{\exp(2jkR)}{R}\exp\left\{j\frac{k}{4R}(x_i - x_j)^2\right\}}_{\text{contribution déterministe}} \times \underbrace{\sum_{d=1}^{N_d} A_d \exp\left\{j\frac{k}{4R}\left[(x_i + x_j - 2X_d)^2\right]\right\}}_{\text{contribution aléatoire}}$$

$$(5)$$

Le terme apparaissant devant la somme de l'équation (5) est indépendant de la répartition exacte des diffuseurs, il s'agit donc d'une contribution déterministe, qui caractérise la diffusion simple. Le terme de droite est aléatoire, car il dépend explicitement de la position des diffuseurs.

A contrario, le signal lié à la diffusion multiple (Equation 4) ne peut pas s'écrire ainsi.

Cette propriété des signaux issus de la diffusion simple se traduit par une cohérence particulière suivant les antidiagonales de chaque matrice K(T,f), comme l'illustre la **figure 4.** En effet, le long de chaque antidiagonale, c'est-à-dire pour les couples émetteur(i)/récepteur(j) tels que i+j=constante, la contribution aléatoire de $k_{ij}^S$ est constante. Pour un milieu diffuseur donné, en régime de diffusion simple, il existe donc une relation de phase déterministe entre les coefficients de chaque matrice K(T,f) situés sur la même antidiagonale.

En revanche, en régime de diffusion multiple, cette propriété n'est plus vérifiée et la matrice K(T,f) ne présente pas de cohérence particulière : les éléments $k_{ij}^M$ sont indépendants les uns des autres.

Le présent procédé permet de tirer profit de cette propriété pour isoler les contributions de diffusion simple et multiple par filtrage à partir des signaux mesurés expérimentalement, en exploitant la symétrie particulière de la contribution de diffusion simple au sein de chaque matrice K(T,f). On peut ainsi extraire par filtrage :

- la composante de diffusion simple $k_{ij}^s(T,f)$ de chaque coefficient $k_{ij}(T,f)$ de la matrice K(T,f), telle que les composantes de diffusion simple $k_{ij}^s(T,f)$ soient cohérentes entre elles sur chaque antidiagonale de ladite matrice K(T,f),
- et la composante de diffusion multiple $k_{ij}^M(T,f)$ de chaque coefficient $k_{ij}(T,f)$ de la matrice K(T,f), telles que les composantes $k_{ij}^M(T,f)$ soient aléatoires et non corrélées entre elles.

Deux exemples de techniques de filtrage, pouvant être utilisées pour séparer les deux contributions, sont présentés ci-après.

Dans ces deux techniques, l'étape de traitement (c) comporte les deux sous-étapes suivantes, à la suite de la sous-étape (c1) de détermination de matrice de transfert fenêtrée :

- **une sous-étape (c2) de rotation de données,** par rotation des données de chaque matrice K(T,f) et création de deux sous-matrices $\mathbf{A_1}$(T,f) et $\mathbf{A_2}$(T,f),
- **la sous-étape (c3) susmentionnée de filtrage,** au cours de laquelle on filtre les matrices $\mathbf{A_1}$ et $\mathbf{A_2}$, notamment par projection (**technique 1**) ou par décomposition en valeurs singulières (**technique 2**), et on obtient alors deux matrices filtrées, notées $\mathbf{A_1^F}$ et $\mathbf{A_2^F}$,
- **une sous-étape de rotation de données de sens inverse (c4),** permettant de reconstituer, à partir de $\mathbf{A_1^F}$ et $\mathbf{A_2^F}$, de matrices de transfert filtrées $K^F$(T,f), contenant soit la contribution de diffusion simple soit la contribution de diffusion multiple, selon le type de filtrage employé.

Ces sous-étapes (c2) à (c4) sont détaillées ci-après.

## Sous-étape (c2) : Rotation des données

Au cours de cette sous-étape (c2), l'unité centrale 5 calcule deux matrices A1(T,f)=[a1$_{uv}$(T,f)] et A2=[a2$_{uv}$(T,f)] à partir de chaque matrice K(T,f), où :

$$a1_{uv}(T,f) = k_{u+v-1,\ v-u+2M-1}(T,f),$$

$$a2_{uv}(T,f) = k_{u+v,\ v-u+2M-1}(T,f),$$

$$M = (N+3)/4.$$

N est choisi de façon que M soit un entier : par exemple, N=125, et M=32. Si le nombre total de transducteurs 3 est tel que M n'est pas un entier, on travaille sur un nombre réduit N de transducteurs, tel que M=(N+3)/4 soit entier (dans l'exemple particulier considéré ici, on peut par exemple utiliser une barrette de 128 transducteurs et travailler sur uniquement N=125 d'entre eux).

Les matrices A1 et A2 sont des matrices carrées constituées de sous-ensembles de la matrice K(T,f) qui sont pivotés de 45° dans le sens antihoraire. Ces matrices A1 et A2 sont schématisées respectivement sur les **figures 4 et 5,** qui doivent être comprises comme suit :

- A1 est une matrice carrée de taille ($2M$-1) $\times$ ($2M$-1) dont les lignes sont constituées par certaines diagonales de la matrice K(T,f) (une sur deux), comprenant les coefficients de la matrice K(T,f) qui sont entourés sur la figure 4 (les coefficients de K(T,f) sont schématisés par des points sur les figures 4 et 5),
- A2 est une matrice carrée de taille ($2M$-2) $\times$ ($2M$-2) dont les lignes sont constituées par les autres diagonales de la matrice K(T,f), comprenant les coefficients de la matrice K(T,f) qui sont entourés sur la figure 5.

Dans ce qui suit, on appellera Ar=[ar$_{ij}$] les matrices A1 et A2 (r=1 ou 2) et on appellera L la dimension de la matrice Ar (pour la matrice A1, on a donc $L=2M$-1 et pour la matrice A2, $L=2M$-2).

Du fait de la réciprocité spatiale, la matrice K est symétrique par rapport à sa diagonale principale D ($k_{ij}=k_{ji}$). La matrice Ar présente donc elle aussi une symétrie : chaque ligne sa partie supérieure est identique à une ligne de la partie inférieure, symétrique par rapport à une médiane horizontale correspondant à la diagonale principale D. La partie supérieure de la matrice Ar peut donc être déduite directement de la partie inférieure. Ainsi, chaque colonne de la matrice A1 ne comporte que $M$ coefficients indépendants bien qu'elle soit de taille $L>M$, et chaque colonne de la matrice A2 comporte $M-1$ coefficients indépendants. Plus généralement, le nombre de coefficients indépendants de la matrice Ar est donc un nombre Mr tel que Mr=M si r=1 et Mr=M-1 si r=2.

### Sous-étape (c3) : Filtrage

Au cours de la sous-étape de filtrage (c3), l'unité centrale 5 sépare la composante de diffusion multiple de la composante de diffusion simple dans chacune des matrices Ar, r étant un indice égal à 1 ou 2, et on obtient ainsi au moins deux matrices filtrées Ar$^F$ correspondant respectivement aux deux matrices Ar et représentatives chacune, soit de la composante de diffusion simple, soit de la composante de diffusion multiple.

Ce filtrage peut être réalisé notamment selon la technique 1 susmentionnée ou selon la technique 2 susmentionnée.

### 1. Technique 1 : Filtrage par projection

Dans cette première technique, au cours de la sous-étape de filtrage (c3), l'unité centrale 5 calcule deux matrices filtrées Ar$^F$ qui sont **représentatives de la diffusion simple.**

Chacune de ces matrices filtrées est calculée par la formule :

$Ar^F = S^t S^* Ar$, où :

- S=[s$_u$] est un vecteur colonne, $^t$S* étant la transposée du vecteur conjugué du vecteur S,

$$s_u = s.\exp\left\{ j\frac{k}{2R} y_u^2 \right\} \Big/ \sqrt{L},$$

- les composantes s$_u$ du vecteur S sont des nombres complexes égaux à :
- s est une constante, en pratique égale à 1 (et donc non mentionnée dans la suite),

$$y_u = (x_i - x_j)\Big/\sqrt{2},$$ avec u=(i-j)/2+M si r=1 et u=(i-j-1)/2+M si r=2,

- $x_i$ et $x_j$ sont les abscisses des transducteurs d'indices i et j selon un axe X, l'ensemble de transducteurs s'étendant au moins selon ledit axe X,
- L=2M-1 pour r=1 et L=2M-2 pour r=2.

Cette formule de calcul se justifie comme suit.

Chaque matrice Ar est la somme deux termes, Ar$^S$ et Ar$^M$, désignant respectivement les contributions dues à la diffusion simple et à la diffusion multiple :

$$Ar = Ar^S + Ar^M \qquad (6)$$

La rotation des données, i.e. le passage de K(T,f) à Ar, se traduit mathématiquement par le changement de coordonnées $(x_i,x_j) \rightarrow (y_u,y_v)$ :

$$y_u = (x_i - x_j)/\sqrt{2} \quad \text{et} \quad y_v = (x_i + x_j)/\sqrt{2}$$

L'équation (5) se réécrit alors dans cette nouvelle base : où

$$ar_{uv}^S(T,f) = \underbrace{\frac{\exp(2jkR)}{R} \exp\left\{ j\frac{k}{2R} y_u^2 \right\}}_{\substack{\text{contribution}\\ \text{déterministe}}} \times \underbrace{\Gamma_v}_{\substack{\text{contribution}\\ \text{aléatoire}}} \qquad (7)$$

$$\Gamma_v = \sum_{d=1}^{N_d} A_d \exp\left\{ j\frac{k}{2R}\left[ \left(y_v - \sqrt{2}X_d\right)^2 \right] \right\}.$$

Ainsi pour un milieu 1 donné, chaque colonne de la matrice Ar$^S$ présente une dépendance suivant l'indice des lignes (u) parfaitement déterminée.

En revanche, la contribution de diffusion multiple (Equation 4) ne peut se factoriser aussi simplement. Même après rotation de la matrice, le caractère aléatoire de la position des diffuseurs persiste sur les colonnes comme sur les lignes de la matrice Ar$^M$.

Le filtrage des signaux simplement diffusés peut donc être réalisé en projetant les colonnes de la matrice totale Ar sur l'espace «caractéristique de la diffusion simple», engendré par le vecteur **S** de coordonnées :

$$s_u = \exp\left\{ j\frac{k}{2R} y_u^2 \right\} / \sqrt{L} \qquad (8).$$

La présence au dénominateur de $\sqrt{L}$ assure la normalisation du vecteur **S**. Le vecteur ligne P, résultat de cette projection s'écrit :

$$\mathbf{P} = {}^t\mathbf{S}^* \mathbf{A}r \qquad (9),$$

où ${}^t S^*$ est la transposée du vecteur conjugué de S.

Les coordonnées du vecteur P sont données par :

$$p_v = \sum_u s_u^* a_{uv} = \sum_u s_u^* a_{uv}^S + \sum_u s_u^* a_{uv}^M = \sqrt{L}\frac{\exp(2jkR)}{R}\Gamma_v + \sum_u s_u^* a_{uv}^M \qquad (10)$$

$$\sum_u s_u^* a_{uv}^M$$

Le terme résiduel correspond à la projection des signaux multiplement diffusés sur le vecteur **S.**

Ensuite, la matrice filtrée Ar$^F$ est obtenue en multipliant le vecteur colonne **S** par le vecteur ligne P :

$$\mathbf{Ar^F = SP = S.^t S^*.A} \quad (11)$$

Les coordonnées de la matrice Ar$^F$ s'écrivent alors :

$$ar_{uv}^F = s_u p_v = \frac{\exp(2jkR)}{R}\exp\left\{ j\frac{k}{2R}y_u^2 \right\}\Gamma_v + s_u \sum_{u'} s_{u'}^* a_{u'v}^M \quad (12)$$

Le premier terme est strictement égal à la composante simplement diffusée (Equation 7). On a donc :

$$a_{uv}^F = a_{uv}^S + s_u \sum_{u'} s_{u'}^* a_{u'v}^M \quad (13)$$

En termes de matrices, l'équation (13) se réécrit de la manière suivante:

$$\mathbf{Ar^F = \underbrace{Ar^S}_{diffusion\ simple} + \underbrace{S.^t S^*.A^M}_{bruit\ résiduel}} \quad (14)$$

La matrice Ar$^F$ contient bien la contribution liée à la diffusion simple (A$^S$). Mais elle contient également un terme résiduel lié à la présence de diffusion multiple (S$^t$S$^*$A$^M$). La persistance de ce terme est due au fait que les signaux de diffusion multiple ne sont pas strictement orthogonaux à l'espace caractéristique de la diffusion simple, engendré par le vecteur S. Le filtrage réalisé n'est donc pas parfait, cependant, on peut évaluer l'importance du bruit résiduel.

En effet, comme on l'a vu au paragraphe concernant la rotation des données, chaque colonne de la matrice A1 ne dispose que de $M$ coefficients indépendants et la matrice A2 de M-1 coefficients indépendants ; la contribution de diffusion multiple est donc diminuée d'un facteur $\sqrt{Mr}$ suite au filtrage. La contribution de diffusion simple restant inchangée, le gain en rapport «signal/bruit», ou plus exactement «diffusion simple/diffusion multiple» est donc de l'ordre de $\sqrt{Mr}$.

La technique de filtrage décrite ci-dessus (technique 1) est à utiliser notamment quand on souhaite extraire une contribution de diffusion simple noyée dans de la diffusion multiple, c'est-à-dire dans le cas de milieux pour lesquels les signaux simplement diffusés sont d'amplitude très faible par rapport aux signaux issus de diffusion multiple. Cela s'applique notamment au cas de la détection de cibles enfouies dans un milieu diffusant.

**2. Technique 2 : Filtrage par décomposition en valeurs singulières**

Cette seconde technique consiste à séparer diffusion simple et multiple en effectuant la décomposition en valeurs singulières ou SVD («Singular Value Decomposition») des matrices A$_1$ et A$_2$ obtenues après rotation. La SVD a en effet la propriété de décomposer une matrice en deux sous-espaces : un espace dit «signal» (matrice caractérisée par une importante corrélation entre lignes et/ou colonnes de la matrice) et un espace dit «bruit» (matrice d'aspect aléatoire, sans corrélation entre éléments). En appliquant la SVD aux matrices Ar obtenues après rotation, l'espace signal correspond à la matrice Ar$^S$ (contribution de diffusion simple, caractérisée par une grande corrélation suivant ses colonnes) et l'espace bruit est associé à la matrice Ar$^M$ (contribution de diffusion multiple), avec Ar= Ar$^S$+ Ar$^M$ (Equation 6 déjà citée au paragraphe concernant la technique 1).

La SVD des matrices Ar s'écrit de la manière suivante :

$$\mathbf{A}r = \mathbf{U}\mathbf{\Lambda}^{\mathbf{t}}\mathbf{V}^{*} = \sum_{i=1}^{L} \lambda_{i}\mathbf{U}_{\mathbf{i}}^{\mathbf{t}}\mathbf{V}_{\mathbf{i}}^{*} \qquad (15)$$

U et V sont des matrices carrées unitaires de dimension *L*. Leurs colonnes respectives U$_i$ et V$_i$ correspondent aux vecteurs propres associées à la valeur singulière $\lambda_{i,r}$. $\Lambda$ est une matrice carrée diagonale de dimension *L* dont les éléments diagonaux correspondent aux valeurs singulières $\lambda_{i,r}$ rangées dans l'ordre décroissant. Dans le paragraphe concernant la rotation de données, une symétrie particulière de la matrice Ar a été mise en évidence : cette matrice ne comprend que *Mr* lignes indépendantes, elle est donc de rang *Mr<L*. Donc la matrice Ar ne présente que *Mr* valeurs singulières non nulles et l'équation (15) se réécrit :

$$\mathbf{A}r = \mathbf{U}\mathbf{\Lambda}^{\mathbf{t}}\mathbf{V}^{*} = \sum_{i=1}^{Mr} \lambda_{i}\mathbf{U}_{\mathbf{i}}^{\mathbf{t}}\mathbf{V}_{\mathbf{i}}^{*} \qquad (16)$$

La diffusion simple se caractérisant, après rotation des données, par une grande cohérence le long des colonnes des matrices Ar, la SVD fait ressortir cette contribution dans l'espace signal (la contribution diffusion simple sera associée aux valeurs singulières les plus élevées) alors que la contribution de diffusion multiple sera associée aux valeurs singulières plus faibles. Ici, contrairement à la première technique de filtrage, on ne fait donc pas d'hypothèse *a priori* sur la forme de la cohérence existant sur les antidiagonales de la matrice K(T,f) dans le cas de la diffusion simple, on suppose simplement que cette cohérence existe.

Le problème est de déterminer à quel rang de valeur singulière correspond le seuil séparant l'espace «signal» (associé à la diffusion simple) de l'espace «bruit» (associé à la diffusion multiple). Si l'équation (5) était rigoureusement exacte, seule la première des valeurs singulières correspondrait à l'espace signal. Lorsque les hypothèses aboutissant à l'équation (5) ne sont pas rigoureusement exactes, la contribution de diffusion simple n'est pas de rang 1 et plusieurs valeurs singulières portent la trace de cette contribution. Il faut alors établir un critère de séparation entre les contributions de diffusion simple (espace signal) et de diffusion multiple (espace bruit).

Pour ce faire, on utilise les résultats de la théorie des matrices aléatoires. Par convention et souci de simplification, les valeurs singulières $\lambda_{i,r}$ sont normalisées par leur moyenne quadratique :

$$\widetilde{\lambda}_{i,r} = \frac{\lambda_{i,r}}{\sqrt{\dfrac{1}{Mr+1-i}\displaystyle\sum_{m=i}^{Mr}\lambda_{m,r}^{2}}} \qquad (17)$$

Pour une matrice de grande dimension dont les coefficients sont totalement aléatoires, sans corrélation entre eux, la première valeur singulière $\widetilde{\lambda}_{1}$ ne dépasse jamais une valeur $\widetilde{\lambda}_{\max}(\widetilde{\lambda}_{\max} = 2$, dans le cas d'une matrice carrée).

Expérimentalement, la contribution de diffusion multiple ne correspond pas tout à fait à une matrice totalement aléatoire, car il existe des corrélations résiduelles entre capteurs (notamment à cause du couplage mécanique ou électrique entre transducteurs voisins de l'ensemble 3), ce qui modifie $\widetilde{\lambda}_{\max}$. On peut établir à partir de [A.M. Sengupta and P.P. Mitra, "Distributions of singular values for some random matrices," Phys. Rev. E, Vol.60(3), pp 3389-3392, 1999.], la nouvelle loi de probabilité pour les valeurs singulières d'une telle matrice et en déduire la valeur de $\widetilde{\lambda}_{\max}$ qui va permettre de définir un critère de séparation objectif entre l'espace signal et l'espace bruit.

Après rotation des données expérimentales, la matrice Ar à traiter (cf équation 6) est donc la somme d'une matrice Ar$^S$ de rang *p<M* associée à la diffusion simple et d'une matrice Ar$^M$ de rang *M* associée à la diffusion multiple que l'on désire filtrer.

La technique proposée est la suivante : après avoir effectué la SVD, l'unité centrale 5 considère la première valeur singulière $\widetilde{\lambda}_{l,r}$ après normalisation. Si celle-ci est supérieure à $\widetilde{\lambda}_{\max}$, cela signifie que le premier espace propre est associé à de la diffusion simple.

On itère ensuite le processus au rang 2 et aux rangs supérieurs si nécessaire.

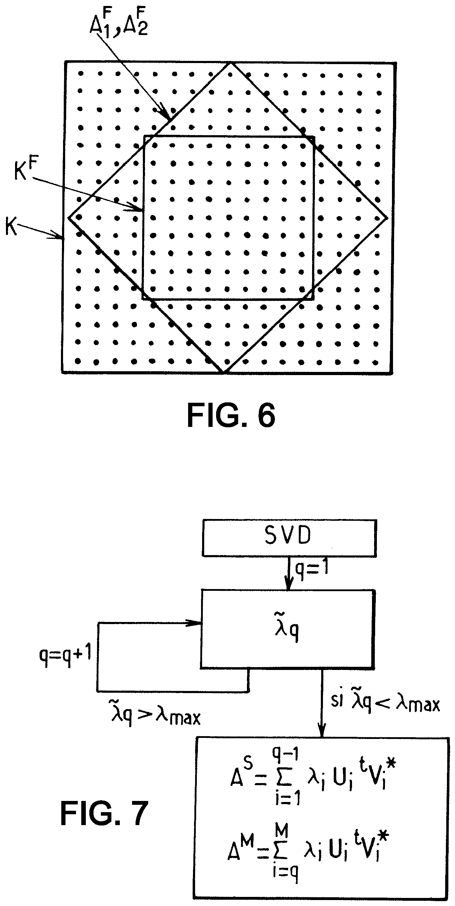

Comme représenté sur la **figure 7,** le traitement effectué par l'unité centrale 5 est donc un traitement itératif qui comprend les sous-étapes suivantes :

(c31) on fixe initialement q=1,

$$\tilde{\lambda}_{q,r} = \frac{\lambda_{q,r}}{\sqrt{\dfrac{1}{Mr+1-q}\displaystyle\sum_{m=q}^{Mr}\lambda_{m,r}^2}} \; ,$$

(c32) on calcule une valeur singulière normalisée à partir de $\lambda_{q,r}$ :

(c33) si $\tilde{\lambda}_{q,r}$ est au moins égal à une valeur seuil prédéterminée $\tilde{\lambda}_{\max}$, on attribue $\tilde{\lambda}_{q,r}$ à la diffusion simple et on réitère la sous-étape (c32) en incrémentant q d'une unité,

(c34) si $\tilde{\lambda}_{q,r}$ est inférieur à la valeur seuil $\tilde{\lambda}_{\max}$, on attribue $\tilde{\lambda}_{q,r}$ et les éventuelles valeurs singulières suivantes à la diffusion multiple.

Si on appelle p+1 le rang pour lequel $\tilde{\lambda}_{p+1,r} < \tilde{\lambda}_{\max}$, on obtient ainsi :

$$\mathbf{A}r^{\mathbf{S}} = \sum_{i=1}^{p} \lambda_{i,r}\, \mathbf{U_i}^{\mathbf{t}} \mathbf{V_i}^{*} \quad (19)$$

$$\mathbf{A}r^{\mathbf{M}} = \sum_{i=p+1}^{Mr} \lambda_{i,r}\, \mathbf{U_i}^{\mathbf{t}} \mathbf{V_i}^{*} \quad (20)$$

La matrice Ar$^{\text{S}}$ contient alors la contribution de diffusion simple (plus une contribution de diffusion multiple résiduelle) et la matrice Ar$^{\text{M}}$ est associée à la diffusion multiple.

On notera que la technique 2 suppose que la première des valeurs singulières normalisée dépasse le seuil $\tilde{\lambda}_{\max}$. Elle ne peut pas être utilisée dans les milieux hautement diffusants, c'est-à-dire des milieux pour lesquels la contribution de diffusion multiple est prépondérante par rapport à la diffusion simple. Dans ce cas, on utilisera plutôt la technique de filtrage par projection des antidiagonales sur l'espace de diffusion simple (technique 1) pour extraire la contribution de diffusion simple. Si au contraire la contribution de diffusion simple est prépondérante ou du même ordre de grandeur que la diffusion multiple, on pourra utiliser la technique de filtrage par SVD des matrices A (technique 2) et ainsi extraire la contribution de diffusion multiple.

**Sous-étape (c4) : rotation de données de sens inverse**

Au cours de la sous-étape de rotation de données de sens inverse (c4), l'unité centrale 5 effectue une transformation inverse de la transformation décrite à la sous-étape (c1), et calcule ainsi une matrice de transfert fenêtrée filtrée K$^{\text{F}}$(T,f)=[k$^{\text{F}}_{ij}$(T,f)], où :

- lorsque i-j est pair : k$^{\text{F}}_{ij}$(T,f)=a1$^{\text{F}}_{(i-j)/2+M, (i+j)/2}$,
- lorsque i-j est impair : k$^{\text{F}}_{ij}$(T,f)=a2$^{\text{F}}_{(i-j-1)/2+M, (i+j-1)/2}$.

La matrice K$^{\text{F}}$(T,f) est une matrice carrée de taille (2M-1) $\times$ (2M-1), contenant des signaux qui sont issus soit de la diffusion simple, soit de la diffusion multiple, selon le type de filtrage appliqué. La procédure de rotation inverse des données est schématisée sur la **figure 6,** qui montre que la matrice K$^{\text{F}}$(T,f) reprend une partie des coefficients des antidiagonales des matrices A1(T,f) et A2(T,f).

Les matrices filtrées K$^{\text{F}}$(T,f) peut ensuite être utilisée de diverses façons :

- si K$^{\text{F}}$(T,f) correspond à la composante de diffusion simple, elle peut être utilisée notamment pour détecter un point singulier du milieu 1 ou pour bâtir une image du milieu 1. A cet effet, deux méthodes d'imagerie peuvent par exemple être utilisées :

  ➢ Selon une première méthode d'imagerie, l'unité centrale 5 peut par exemple calculer à partir chaque matrice K$^{\text{F}}$(T,f), par transformée de Fourier inverse, une matrice temporelle fenêtrée filtrée de réponse inter-éléments H$^{\text{F}}$(T,t) puis sommer les différentes matrices temporelles H$^{\text{F}}$(T,t) pour obtenir une matrice temporelle filtrée de réponse inter-éléments H$^{\text{F}}$(t), représentative des réponses entre transducteurs de l'ensemble de transducteurs.

L'unité centrale réalise alors l'image du milieu par formation de voies à partir de ladite matrice temporelle filtrée de réponse inter-éléments $H^F(t)$.

➢ Selon une deuxième méthode d'imagerie, dite méthode de décomposition de l'opérateur de retournement temporel («méthode DORT», définie notamment par Prada et al., «Eigenmodes of the time reversal operator : a solution to selective focusing in multiple-target media», Wave Motion 20 (1994) 151-163, Elsevier Science B.V.), l'unité centrale 5 peut procéder aux étapes suivantes :

(d1) déterminer pour chaque matrice de transfert filtrée $K^F(T,f)$ un opérateur de retournement temporel $ORT(T,f) = K^{F*}(T,f)K^F(T,f)$, correspondant à la ou chaque matrice de transfert $K^F(T,f)$, $K^{F*}(T,f)$ étant la matrice conjuguée complexe de $K^F(T,f)$,
(d2) déterminer au moins des vecteurs propres et/ou des valeurs propres dudit opérateur de retournement temporel,
(d3) détecter au moins une singularité dans le milieu en fonction au moins desdits vecteurs propres et/ou desdites valeurs propres. Au cours de cette étape (d3), on peut notamment déterminer des vecteurs propres $Vi(f)$ de l'opérateur de retournement temporel, puis propager numériquement ces vecteurs propres dans un modèle numérique du milieu 1, pour déterminer une position d'un objet réverbérant dans le milieu 1 correspondant à chaque vecteur propre,

- si les matrices $K^F(T,f)$ correspondent à la composante de diffusion multiple, elles peuvent être utilisées notamment pour calculer à partir de ladite composante de diffusion multiple, un indice représentatif de l'importance de la diffusion multiple dans le milieu. Dans ce cas, on peut par exemple réaliser une image (échographique ou autre) du milieu par tout moyen connu ou par les méthodes susmentionnées, et on quantifie la fiabilité de ladite image en fonction dudit indice représentatif de l'importance de la diffusion multiple. Avantageusement, on peut calculer cet indice en plusieurs points (notamment à diverses profondeurs R) et on quantifie la fiabilité de plusieurs parties de l'image correspondant auxdits plusieurs points, en fonction dudit indice représentatif de l'importance de la diffusion multiple.

**Le procédé de la présente invention** améliore le procédé décrit ci-dessus.
Notamment, on évite de perdre des informations des matrices pendant les étapes de rotation des données (c2) et de rotation de données de sens inverse (c4).
En effet, comme cela est représenté sur les figures 4 à 5, l'étape de rotation de données (c2) de l'art antérieur n'utilise pas les coins de la matrice de transfert fréquentielle fenêtrée K(T,f) pour construire les deux matrices A1(T,f) et A2(T,f), de sorte qu'une grande partie des données de la matrice de transfert fréquentielle fenêtrée K(T,f) est perdue pour la suite des calculs du procédé. Les quatre coins K1, K2, K3, K4 de cette matrice de transfert fréquentielle fenêtrée ne sont ni utilisés pour construire la matrice A1 (voir figure 4), ni pour construire la matrice A2 (voir figure 5). Cette étape de rotation des données exclue donc sensiblement la moitié des données de la matrice de transfert fréquentielle fenêtrée.
Selon un premier mode de réalisation du procédé selon l'invention, la sous-étape de rotation des données (c2) comprend :

- une première sous-étape (c21) au cours de laquelle laquelle la matrice de transfert fréquentielle fenêtrée K(T,f) est introduite à l'intérieur (de préférence au centre) d'une matrice étendue Ke(T,f) de plus grande taille, tous les éléments de ladite matrice étendue Ke en dehors de ceux provenant de la matrice de transfert fréquentielle fenêtrée K(T,f) étant nuls, et
- une seconde sous-étape (c22) (similaire à la sous-étape de rotation des données de l'art antérieur), au cours de laquelle on calcule deux matrices $A1(T,f)=[a1_{uv}(T,f)]$ et $A2=[a2_{uv}(T,f)]$ à partir de la matrice étendue Ke(T,f), par extraction de la matrice étendue Ke(T,f) des sous matrices pivotées de 45° dans un premier sens.

La taille de la matrice étendue Ke est adaptée pour que les éléments issus de la matrice de transfert fréquentielle fenêtrée soient tous inclus dans un carré Ker incliné de 45° et lui-même inclus dans la matrice étendue Ke. Notamment, la taille de la matrice étendue Ke est supérieure ou égale à 2.N-1.

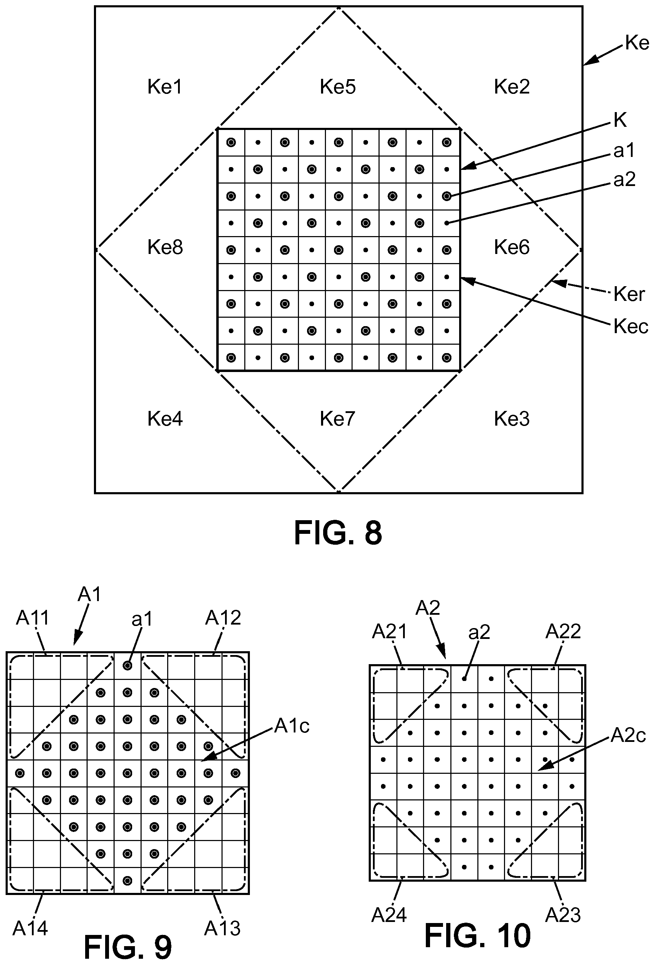

**La figure 8** montre un exemple dans lequel la matrice de transfert fréquentielle fenêtrée K(T,f) est de taille 9x9 (N=9) et cette matrice est introduite au centre de la matrice étendue Ke de plus grande taille. La matrice étendue a alors une taille de 17x17.
La matrice étendue Ke comprend alors des portions de coin Ke1, Ke2, Ke3, Ke4, des portions de côté Ke5, Ke6, Ke7, Ke8, et une portion centrale Kec. Les portions de côté sont également des coins du carré Ker. Tous les éléments de la matrice étendue Ke en dehors de la portion centrale Kec (qui reprend les éléments de la matrice de transfert fréquentielle fenêtrée K(T,f)), sont nuls. C'est-à-dire, tous les éléments des portions de coin Ke1, Ke2, Ke3, Ke4 et des portions de côté Ke5, Ke6, Ke7, Ke8 sont nuls.

Le carré Ker sert de base pour former les matrices A1 et A2 de la seconde sous-étape en prenant un élément sur deux de la matrice étendue Ke, tel qu'expliqué plus loin.

Par exemple, si N est impair, lors de la première sous-étape (c21), la taille de la matrice étendue est 2.N-1, et on définit la matrice étendue Ke par Ke(T,f)=[ke$_{ij}$(T,f)] à partir de la matrice K(T,f), par les relations suivantes ou toutes autres formules équivalentes:

$$
\begin{aligned}
&\text{si} && i \in [1+(N-1)/2\ ;\ N+(N-1)/2],\ \text{et}\\
& && j \in [1+(N-1)/2\ ;\ N+(N-1)/2]\\
&\text{alors} && ke_{ij}(T,f) = k_{i-(N-1)/2,\ j-(N-1)/2}(T,f),\\
&\text{sinon} && ke_{ij}(T,f) = 0.
\end{aligned}
$$

Des formules équivalentes peuvent être établies si N est pair.

Puis, durant la seconde étape (c22), on calcule les deux matrices A1(T,f)=[a1$_{uv}$(T,f)] et A2=[a2$_{uv}$(T,f)] à partir de la matrice étendue Ke(T,f)=[ke$_{ij}$(T,f)].

Dans le cas présenté en figure 8, la matrice A1 aura une taille de 9x9, et la matrice A2 aura une taille de 8x8.

En fait, la matrice A1 a une taille identique à celle de la matrice de transfert fréquentielle fenêtrée K(T,f), c'est-à-dire une taille égale à NxN, et la matrice A2 a une taille égale à celle de la matrice de transfert fréquentielle fenêtrée K(T,f) moins un, c'est-à-dire une taille égale à (N-1)x(N-1).

La **figure 9** représente la matrice A1 extraite de la matrice étendue Ke de la figure 8. Cette matrice A1 prend les éléments représentés par des gros points en les faisant pivoter dans un premier sens (sens trigonométrique) de 45° en les plaçant dans une portion centrale A1c de la matrice A1. L'élément référencé a1 sur la matrice étendue Ke de la figure 8 est également référencé a1 sur la matrice A1 de la figure 9 pour montrer les déplacements des éléments de la matrice étendue Ke vers la matrice A1. Les éléments des portions de coin A11, A12, A13, et A14 de la matrice A1, proviennent des portions de côté Ke5, Ke6, Ke7 et Ke8, respectivement, et sont tous nuls.

La **figure 10** représente la matrice A2 extraite de la matrice étendue Ke de la figure 8. Cette matrice A2 prend les éléments représentés par des petits points en les faisant pivoter dans le premier sens (sens trigonométrique) de 45° en les plaçant dans une portion centrale A2c de la matrice A2. L'élément référencé a2 sur la matrice étendue Ke de la figure 8 est également référencé a2 sur la matrice A2 de la figure 10 pour montrer les déplacements des éléments de la matrice étendue Ke vers la matrice A2. Les éléments des portions de coin A21, A22, A23, et A24 de la matrice A2, proviennent des portions de côté Ke5, Ke6, Ke7 et Ke8, respectivement, et sont tous nuls.

Plus précisément, si N est impair, lors de la seconde sous-étape (c22), on calcule les matrices A1(T,f) et A2(T,f))] à partir de la matrice étendue Ke(T,f)=[ke$_{ij}$(T,f)], par les relations suivantes ou toutes autres formules équivalentes:

$$a1_{uv}(T,f)=ke_{u+v-1,\ v-u+(N+3)/2-1+(N-1)/2}(T,f),$$

et

$$a2_{uv}(T,f)=ke_{u+v,\ v-u+(N+3)/2-1+(N-1)/2}(T,f).$$

Des formules équivalentes peuvent être établies si N est pair.

Selon un second mode de réalisation du procédé selon l'invention, la sous étape de rotation des données (c2) est effectuée directement (sans construire une matrice étendue Ke).

Par exemple, si N est un nombre entier impair, on calcule les deux matrices A1(T,f)=[a1$_{uv}$(T,f)] et A2=[a2$_{uv}$(T,f)] à partir de la matrice de transfert fréquentielle fenêtrée K(T,f)=[k$_{ij}$(T,f)], par les relations suivantes ou toutes formules équivalentes :

- si u+v-1-(N-1)/2 et v-u+(N+3)/2-1 sont tous deux compris entre 1 et N, inclus,

$$
\begin{aligned}
&\text{alors} && a1_{uv}(T,f)=k_{u+v-1-(N-1)/2,\ v-u+(N+3)/2-1}(T,f),\\
&\text{sinon} && a1_{uv}(T,f)=0,\ \text{et}
\end{aligned}
$$

- si u+v-(N-1)/2 et v-u+(N+3)/2-1 sont tous deux compris entre 1 et N-1, inclus,

$$\text{alors}\quad a2_{uv}(T,f)=k_{u+v-(N-1)/2,\ v-u+(N+3)/2-1}(T,f),$$

(suite)

sinon     a2$_{uv}$(T,f)=0.

Des formules équivalentes peuvent être établies si N est pair.

Dans le procédé selon l'invention, la sous-étape de filtrage (c3) est par exemple identique à la sous-étape de filtrage de l'art antérieur. Notamment, on calcule deux matrices filtrées A1$^F$ et A2$^F$ à partir des matrices A1 et A2, par exemple soit à partir de la technique de filtrage par projection explicitée ci-dessus, soit à partir de la technique de filtrage par décomposition en valeurs singulières explicitée ci-dessus, soit à partir de toute autre technique.

Les matrices filtrées A1$^F$ et A2$^F$ ont la même taille que les matrices A1 et A2 déterminées à l'étape de rotation de données (c2).

Notamment, si N est impair, avantageusement, la matrice filtrée A1$^F$ a une taille de NxN et la matrice filtrée A2$^F$ a une taille de (N-1)x(N-1).

En outre, au cours de la sous-étape de rotation de données de sens inverse (c4), on effectue une transformation sensiblement inverse de la transformation décrite pour la sous-étape de rotation des données (c2). Dans cette sous-étape, on calcule une matrice de transfert filtrée K$^F$(T,f)=[k$^F_{ij}$(T,f)] à partir des matrices filtrées A1$^F$(T,f)=[a1$^F_{uv}$(T,f)] et A2$^F$=[a2$^F_{uv}$(T,f)] calculées durant la sous-étape précédente de filtrage (c3).

Cette sous-étape est très similaire ou identique à l'étape de rotation de donnée en sens inverse (c4) de l'art antérieur explicité ci-dessus. Dans cette sous-étape, les éléments des portions centrales des matrices filtrées A1$^F$ et A2$^F$ sont repris et agencés dans la matrice de transfert filtrée K$^F$ par une rotation dans un second sens inverse au premier sens (rotation de 45° dans le sens anti-trigonométrique). Les éléments des portions de coin des matrices filtrées A1$^F$, A2$^F$ ne sont pas repris dans la matrice de transfert filtrée K$^F$. De toute façon, ces éléments sont nuls comme ceux des portions de coin des matrices A1 et A2.

Par exemple, si N est un nombre entier impair, on calcule la matrice de transfert filtrée K$^F$(T,f)=[k$^F_{ij}$(T,f)] à partir des deux matrices A1$^F$(T,f)=[a1$^F_{uv}$(T,f)] et A2$^F$=[a2$^F_{uv}$(T,f)], par les relations suivantes ou toutes formules équivalentes :
si i-j est pair,

alors     k$^F_{ij}$(T,f)=a1$^F_{(i-j)/2+(N+1)/2,\ (i+j)/2}$,
sinon     k$^F_{ij}$(T,f)=a2$^F_{(i-j-1)/2+(N+1)/2,\ (i+j-1)/2}$.

Contrairement au procédé de l'art antérieur, la matrice de transfert fréquentielle fenêtrée filtrée K$^F$(T,f) a alors une taille de NxN, c'est à dire une taille identique à la matrice de transfert fréquentielle fenêtrée K(T,f) initiale.

Dans le procédé de l'art antérieur (voir figure 6), la matrice de transfert fréquentielle fenêtrée filtré K$^F$(T,f) a une taille de (N+1)/2x(N+1)/2. Elle contient un nombre d'élément très inférieurs : approximativement quatre fois moins à cause des éléments perdus lors de la sous-étape de rotation de données (c2) de ce procédé antérieur.

Grâce au procédé selon l'invention, la matrice de transfert fréquentielle fenêtrée filtrée K$^F$(T,f) contient un grand nombre d'éléments, et il est possible de prendre en compte un plus grand nombre de diffusions multiples. Ainsi, le milieu peut être sondé par propagation d'ondes sur une plus grande profondeur. En outre, les images que l'on peut produire du milieu auront une meilleure résolution spatiale. Eventuellement, on pourra utiliser un ensemble 3 de transducteurs ayant un nombre inférieur de transducteur, et donc le procédé et dispositif seront moins coûteux.

En outre, selon un mode de réalisation avantageux, au cours de la sous-étape de détermination de matrice de transfert fenêtrée (c1), on détermine chaque matrice de transfert fréquentielle fenêtrée K(T,f) par transformée en ondelette de la matrice temporelle fenêtrée K(T,t).

La transformée en ondelette d'une fonction *f* temporelle, sur est définie par :

$$g(u,s) = \int_{-\infty}^{\infty} f(t).\psi_{u,s}(t)^*.dt$$

avec

$$\psi_{u,s}(t) = \frac{1}{\sqrt{s}}.\psi(\frac{t-u}{s})$$

$\psi$ est une fonction ondelette mère,
$\psi_{u,s}$ est une ondelette de la famille d'ondelettes,

* désigne le complexe conjugué,
*u* est le facteur de translation, et
*s* est le facteur de dilatation.

Une famille d'ondelettes correspond donc à un banc de filtres fréquentiels. Ce banc de filtres doit contenir les fréquences que l'on souhaite étudier. Le calcul de transformée en ondelette est alors équivalent à la convolution de la réponse impulsionnelle de chaque filtre avec chaque signal temporel, réponse impulsionnelle $h_{ij}(t)$. Les matrices temporelles fenêtrées K(T,t) sont lesdites réponses impulsionnelles $h_{ij}(t)$ entre transducteurs de l'ensemble des transducteurs, sur une fenêtre temporelle voisine du temps T et de durée $\Delta t$. Et, on calcule les matrices fréquentielles fenêtrées K(T,f) par transformées en ondelettes, par exemple par les convolutions définies ci-dessus.

La fonction ondelette mère $\psi$ peut être choisie parmi :

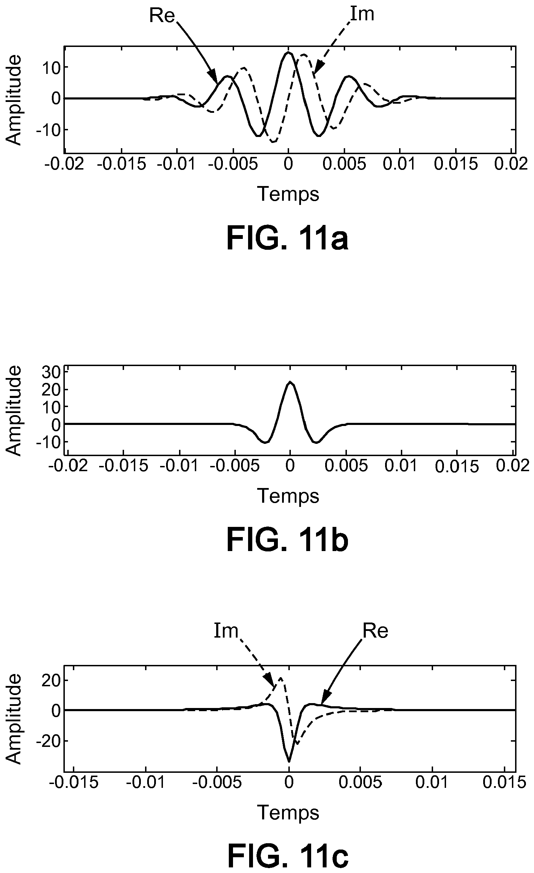

- l'ondelette de Morlet, par exemple représentée en **figure 11a** :

$$\Psi(t) = e^{i\omega_0 t} e^{\frac{-t^2}{2}} \text{,}$$

et

- l'ondelette de Maar (deuxième dérivée de gaussienne), par exemple représentée en **figure 11b** :

$$\Psi(t) = A\left(1 - t^2\right)e^{\frac{-t^2}{2}}$$

avec

$$A = \frac{2}{\sqrt{3}} \pi^{-1/4} \text{,}$$

et

- l'ondelette progressive, par exemple représentée en **figure 11c** :

$$\Psi(t) = \frac{1}{(t + i)^2} \text{.}$$

La famille d'ondelettes peut ainsi être choisie pour correspondre au mieux à la bande passante du transducteur et aux types de signaux impulsionnels à traiter (donc au matériau du milieu).

Grâce à l'utilisation desdites transformées en ondelettes, le procédé selon l'invention permet de sonder le milieu par propagation d'ondes sur une encore plus grande profondeur, avec une plus grande précision et résolution.

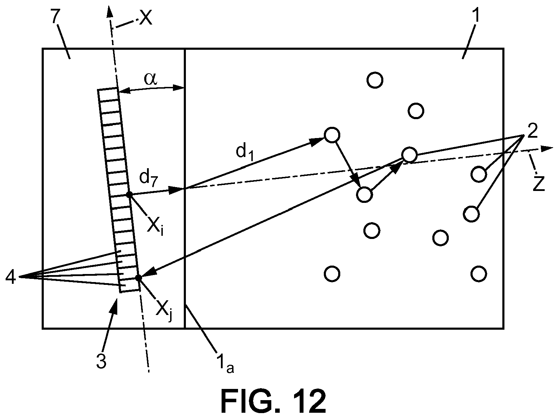

En outre, selon un mode de réalisation avantageux, au cours de l'étape d'émission (a), on fait émettre par l'ensemble 3 de transducteurs une onde incidente, ladite onde incidente étant inclinée d'un angle prédéterminé $\alpha$ avec une surface externe la dudit milieu 1, comme représenté en **figure 12.**

Pour ce faire, l'ensemble 3 de transducteurs est par exemple placé dans un milieu couplant 7 comme représenté. Eventuellement, ce milieu couplant 7 est placé entre l'ensemble 3 est la surface externe la du milieu à sonder, ou ce milieu couplant 7 est intégré à une sonde incorporant au moins l'ensemble et ledit milieu couplant.

Le milieu couplant 7 a par exemple un indice de réfraction $n_7$ différent de l'indice de réfraction $n_1$ du milieu 1 à sonder. Les vitesses de propagation dans ces milieux sont donc respectivement $V_1$ et $V_7$.

Ainsi, dans la technique de filtrage par projection de la sous-étape de filtrage (c3), les composantes du vecteur colonne $S=[s_u]$ sont déterminées par la formulation modifiée suivante :

$$S_u = s.\exp\left\{ j\frac{k}{2d_f} y_u^2 \right\} \Big/ \sqrt{L}$$

où

$d_f$ est la distance focale, qui est la somme d'une première distance $d_7$ parcourue dans le milieu couplant 7 corrigée par la variation d'indice entre les deux milieux et d'une seconde distance $d_1$ parcourue dans le milieu à sonder ; c'est-à-dire :

$$d_f = d_7 . \frac{V_1}{V_7} + d_7$$

Grâce à l'utilisation l'émission d'ondes incidentes inclinées, le procédé selon l'invention est aussi amélioré et permet de sonder le milieu par propagation d'ondes sur une encore plus grande profondeur, avec une plus grande précision et résolution. Notamment, il est possible d'obtenir plus d'information sur la géométrie d'éventuels défauts (plans ou volumiques) dans le milieu 1 sondé.

## Revendications

1. **Procédé de sondage par propagation d'ondes** utilisant un ensemble (3) de transducteurs, ledit procédé comprenant :

   (a) une étape d'émission au cours de laquelle on fait émettre par l'ensemble (3) de transducteurs une onde incidente dans un milieu (1) diffusant pour ladite onde,
   (b) une étape de mesure au cours de laquelle on fait capter, par ledit ensemble (3) de transducteurs, des signaux représentatifs d'une onde réfléchie réverbérée par le milieu (1) à partir de l'onde incidente, lesdits signaux captés comprenant :

   - une composante de diffusion simple, représentative de trajets d'onde où l'onde réfléchie résulte d'une seule réflexion de l'onde incidente par chaque diffuseur du milieu,
   - et le cas échéant une composante de diffusion multiple, représentative de trajets d'onde où l'onde réfléchie résulte de plusieurs réflexions successives de l'onde incidente sur les diffuseurs du milieu avant d'atteindre l'ensemble de transducteurs,

   (c) une étape de traitement au cours de laquelle on traite lesdits signaux captés en vue de déterminer des caractéristiques du milieu, on extrait au moins une composante choisie parmi la composante de diffusion multiple et la composante de diffusion simple, par filtrage d'au moins une matrice de transfert fréquentielle représentative des réponses entre transducteurs de l'ensemble de transducteurs, et qui comprend au moins les sous-étapes suivantes :

   (c1) une sous-étape de détermination de matrice de transfert fenêtrée au cours de laquelle on détermine au moins une matrice de transfert fréquentielle fenêtrée $K(T,f)$ correspondant à une matrice temporelle fenêtrée de réponse inter-éléments $K(T,t) = [k_{ij}(T,t)]$, ladite matrice temporelle fenêtrée de réponse inter-éléments correspondant, sur une fenêtre temporelle voisine d'un temps $T$ et de durée $\Delta t$, aux réponses temporelles $h_{ij}(t)$ entre transducteurs de l'ensemble de transducteurs, $f$ étant la fréquence,
   (c2) une sous-étape de rotation de données au cours de laquelle on calcule deux matrices $A1(T,f)$ et $A2(T,f)$ à partir de la matrice de transfert fréquentielle fenêtrée $K(T,f)$, par des rotations dans un premier sens et extraction d'éléments de la matrice de transfert fréquentielle fenêtrée,
   (c3) une sous-étape de filtrage au cours de laquelle on sépare la composante de diffusion multiple de la composante de diffusion simple dans chacune des matrices A1, A2, et on obtient ainsi au moins deux matrices filtrées $A1^F$, $A2^F$ correspondant respectivement aux matrices A1, A2, et représentatives chacune, soit de la composante de diffusion simple, soit de la composante de diffusion multiple,
   (c4) une sous-étape de rotation de données de sens inverse au cours de laquelle on calcule une matrice de transfert fenêtrée filtré $K^F(T,f)$ à partir des deux matrices filtrées $A1^F$, $A2^F$ par des rotations dans un second sens inverse du premier sens et extraction d'éléments des matrices filtrées $A1^F$, $A2^F$,

ledit procédé étant **caractérisé en ce que** :

- au cours de l'étape de rotation de données (c2), toutes les composantes de la matrice de transfert fréquentielle fenêtrée K(T,f) sont réparties dans une partie centrale de l'une ou l'autre des deux matrices A1(T,f) et A2(T,f), ces matrices ayant dans une partie externe à la partie centrale des valeurs nulles, et
- au cours de l'étape de rotation de données de sens inverse (c4), toutes les composantes non nulles des parties centrales des matrices filtrées A1$^F$, A2$^F$ sont extraites et mises dans la matrice de transfert fenêtrée filtrée K$^F$(T,f).

2. Procédé selon la revendication 1, dans lequel la matrice de transfert fenêtrée K(T,f) est une matrice de dimension N*N, N étant impair, et au cour de l'étape de rotation de données (c2), on calcule les deux matrices A1(T,f)=[a1$_{uv}$(T,f)] et A2=[a2$_{uv}$(T,f)] à partir de la matrice de transfert fréquentielle fenêtrée K(T,f)=[k$_{ij}$(T,f)], par les relations suivantes :

- si u+v-1-(N-1)/2 et v-u+(N+3)/2-1 sont tous deux compris entre 1 et N, inclus,

$$\text{alors} \quad a1_{uv}(T,f)=k_{u+v-1-(N-1)/2,\ v-u+(N+3)/2-1}(T,f),$$
$$\text{sinon} \quad a1_{uv}(T,f)=0,\ \text{et}$$

- si u+v-(N-1)/2 et v-u+(N+3)/2-1 sont tous deux compris entre 1 et N-1, inclus,

$$\text{alors} \quad a2_{uv}(T,f)=k_{u+v-(N-1)/2,\ v-u+(N+3)/2-1}(T,f),$$
$$\text{sinon} \quad a2_{uv}(T,f)=0.$$

3. Procédé selon la revendication 1, dans lequel la sous-étape de rotation des données (c2) comprend :

- une première sous-étape (c21) au cours de laquelle la matrice de transfert fréquentielle fenêtrée K(T,f) est introduite à l'intérieur d'une matrice étendue Ke(T,f) de plus grande taille, tous les éléments de la matrice étendue autres que ceux provenant de la matrice de transfert fréquentielle fenêtrée étant nuls, et
- une seconde sous-étape (c22) au cours de laquelle on calcule les deux matrices A1(T,f) et A2(T,f) à partir de la matrice étendue Ke(T,f).

4. Procédé selon la revendication 3, dans lequel la matrice de transfert fenêtrée K(T,f) est une matrice de dimension N*N, N étant impair, et :

- au cours de la première sous-étape (c21), la matrice étendue Ke(T,f)=[ke$_{ij}$(T,f)] est définie par :

$$\text{si} \quad i \in [1+(N-1)/2 ; N+(N-1)/2], \text{ et}$$
$$j \in [1+(N-1)/2 ; N+(N-1)/2]$$
$$\text{alors} \quad ke_{ij}(T,f) = k_{i-(N-1)/2,\ j-(N-1)/2}(T,f),$$
$$\text{sinon} \quad ke_{ij}(T,f) = 0,\ \text{et}$$

- au cours de la seconde sous-étape (c22), les deux matrices A1(T,f)=[a1$_{uv}$(T,f)], A2(T,f)=[a2$_{uv}$(T,f)], sont calculées par les relations suivantes :

$$a1_{uv}(T,f)=ke_{u+v-1,\ v-u+(N+3)/2-1+(N-1)/2}(T,f),$$

$$a2_{uv}(T,f)=ke_{u+v,\ v-u+(N+3)/2-1+(N-1)/2}(T,f).$$

et

5. Procédé selon l'une des revendications 1 à 4, dans lequel la matrice de transfert fenêtrée K(T,f) est une matrice de dimension N*N, N étant impair, et au cour de l'étape de rotation de données de sens inverse (c4), on calcule la matrice de transfert fenêtrée filtrée K$^F$(T,f)=[k$^F_{ij}$(T,f)] à partir des matrices filtrées A1$^F$(T,f)=[a1$^F_{uv}$(T,f)],

$A2^F(T,f)=[a2^F_{uv}(T,f)]$ par les relations suivantes :
si i-j est pair,

$$\text{alors} \quad k^F_{ij}(T,f)=a1^F_{(i-j)/2+(N+1)/2,\ (i+j)/2},$$
$$\text{sinon} \quad k^F_{ij}(T,f) = a2^F_{(i-j-1)/2+(N+1)/2,\ (i+j-1)/2}.$$

6. Procédé selon l'une des revendications 1 à 5, dans lequel au cours de la sous-étape de détermination de la matrice de transfert fenêtrée (c1), on détermine chaque matrice de transfert fréquentielle fenêtrée K(T,f) par transformée en ondelette de la matrice temporelle fenêtrée K(T,t) correspondant, sur ladite fenêtre temporelle voisine du temps T et de durée $\Delta t$, aux réponses temporelles $h_{ij}(t)$ entre transducteurs de l'ensemble de transducteurs.

7. Procédé selon l'une quelconque des revendications 1 à 6, dans lequel les fenêtres temporelles des différentes matrices de transfert fenêtrées K(T,f) se chevauchent au moins deux à deux.

8. Procédé selon la revendication 1, dans lequel, au cours de la sous-étape de filtrage (c3) :

   - on extrait une composante de diffusion simple $k^s_{ij}(T,f)$ de chaque coefficient $k_{ij}(T,f)$ de la matrice K(T,f), telle que les composantes de diffusion simple $k^s_{ij}(T,f)$ soient cohérentes entre elles sur chaque antidiagonale de ladite matrice K(T,f), et
   - on extrait une composante de diffusion multiple $k^M_{ij}(T,f)$ de chaque coefficient $k_{ij}(T,f)$ de la matrice K(T,f).

9. Procédé selon la revendication 1, dans lequel au cours de l'étape d'émission l'onde incidente émise dans un milieu (1) est inclinée d'un angle prédéterminé avec une surface externe dudit milieu.

10. **Dispositif pour la mise en oeuvre d'un procédé de sondage** selon l'une quelconque des revendications précédentes, comprenant un ensemble (3) de transducteurs adaptés pour émettre une onde incidente dans un milieu (1) diffusant et pour capter des signaux représentatifs d'une onde réfléchie réverbérée par le milieu à partir de l'onde incidente, lesdits signaux captés comprenant :

    - une composante de diffusion simple, représentative de trajets d'onde où l'onde réfléchie résulte d'une seule réflexion de l'onde incidente par chaque diffuseur du milieu,
    - et le cas échéant une composante de diffusion multiple, représentative de trajets d'onde où l'onde réfléchie résulte de plusieurs réflexions successives de l'onde incidente sur les diffuseurs du milieu avant d'atteindre l'ensemble de transducteurs,

    ledit dispositif comportant en outre des moyens de traitement (5) adaptés pour traiter lesdits signaux captés en vue de déterminer des caractéristiques du milieu (1), les moyens de traitement (5) sont adaptés pour extraire au moins une composante choisie parmi la composante de diffusion multiple et la composante de diffusion simple, par filtrage d'au moins une matrice de transfert fréquentielle représentative des réponses entre transducteurs de l'ensemble de transducteurs, et les moyens de traitement (5) effectuent au moins les sous-étapes suivantes :

    (c1) une sous-étape de détermination de matrice de transfert fenêtrée au cours de laquelle on détermine au moins une matrice de transfert fréquentielle fenêtrée K(T,f) correspondant à une matrice temporelle fenêtrée de réponse inter-éléments K(T,t)=[$k_{ij}(T,t)$], ladite matrice temporelle fenêtrée de réponse inter-éléments correspondant, sur une fenêtre temporelle voisine d'un temps T et de durée $\Delta t$, aux réponses temporelles $h_{ij}(t)$ entre transducteurs de l'ensemble de transducteurs, f étant la fréquence,
    (c2) une sous-étape de rotation de données au cours de laquelle on calcule deux matrices A1(T,f) et A2(T,f) à partir de la matrice de transfert fréquentielle fenêtrée K(T,f), par des rotations dans un premier sens et extraction de composantes de la matrice de transfert fréquentielle fenêtrée,
    (c3) une sous-étape de filtrage au cours de laquelle on sépare la composante de diffusion multiple de la composante de diffusion simple dans chacune des matrices A1, A2, et on obtient ainsi au moins deux matrices filtrées A1$^F$, A2$^F$, correspondant respectivement aux matrices A1, A2 et représentatives chacune, soit de la composante de diffusion simple, soit de la composante de diffusion multiple,
    (c4) une sous-étape de rotation de données de sens inverse au cours de laquelle on calcule une matrice de transfert fenêtrée filtrée K$^F$(T,f) à partir des deux matrices filtrées A1$^F$, A2$^F$, par des rotations dans un second sens inverse du premier sens et extraction de composantes des matrices filtrées A1$^F$, A2$^F$,

ledit dispositif étant **caractérisé en ce que** les moyens de traitement (5) sont adaptés pour que :

- au cours de l'étape de rotation de données (c2) toutes les composantes de la matrice de transfert fréquentielle fenêtrée K(T,f) sont réparties dans une partie centrale de l'une ou l'autre des deux matrices A1(T,f) et A2(T,f), ces matrices ayant dans une partie externe à la partie centrale des valeurs nulles, et
- au cours de l'étape de rotation de données de sens inverse (c4) toutes les composantes non nulles des parties centrales des matrices filtrées A1$^F$, A2$^F$ sont extraites et mises dans matrice de transfert fenêtrée filtrée K$^F$(T,f).

## Patentansprüche

1.  Verfahren zur Sondierung mittels Wellenausbreitung, unter Verwendung einer Wandlereinheit (3), wobei das Verfahren umfasst:

    (a) einen Emissionsschritt, während welchem bewirkt wird, dass die Wandlereinheit (3) eine Welle emittiert, die in ein für die Welle diffundierendes Medium (1) einfällt,
    (b) einen Messschritt, während welchem bewirkt wird, dass, durch die Wandlereinheit (3), Signale erfasst werden, welche für eine reflektierte Welle repräsentativ sind, die durch das Medium (1) aus der einfallenden Welle zurückgeworfen wird, wobei die erfassten Signale umfassen:

    - eine einfache Diffusionskomponente, die für Wellenbahnen repräsentativ ist, wo die reflektierte Welle aus einer einzelnen Reflexion der einfallenden Welle an jedem Diffusor des Mediums resultiert,
    - und gegebenenfalls eine mehrfache Diffusionskomponente, die für Wellenbahnen repräsentativ ist, wo die reflektierte Welle aus mehreren aufeinanderfolgenden Reflexionen der auf die Diffusoren des Mediums einfallenden Welle vor Erreichen der Wandlereinheit resultiert,

    (c) einen Behandlungsschritt, während welchem die erfassten Signale zur Bestimmung der Charakteristiken des Mediums behandelt werden, mindestens eine Komponente, die aus der mehrfachen Diffusionskomponente und der einfachen Diffusionskomponente ausgewählt wird, durch Filtern mindestens einer Frequenz-Transfermatrix extrahiert wird, die für Antworten zwischen Wandlern der Wandlereinheit repräsentativ ist, und welcher mindestens die folgenden Teilschritte umfasst:

    (c1) einen Teilschritt zur Bestimmung der Fenster-Transfermatrix, während welchem mindestens eine Fenster-Frequenz-Transfermatrix K(T,f) bestimmt wird, die einer Zeit-Fenster-Matrix einer Antwort zwischen Elementen K(T,t)=[k$_{ij}$(T,t)] entspricht, wobei die Zeit-Fenster-Matrix der Antwort zwischen Elementen, in einem benachbarten Zeit-Fenster mit einer Zeit T und einer Dauer $\Delta$t, Zeit-Antworten h$_{ij}$(t) zwischen Wandlern der Wandlereinheit entspricht, wobei f die Frequenz ist,
    (c2) einen Teilschritt der Datenrotation, während welchem zwei Matrizen A1(T,f) und A2(T,f) aus der Fenster-Frequenz-Transfermatrix K(T,f) durch Rotationen in einer ersten Richtung und Extraktion von Elementen der Fenster-Frequenz-Transfermatrix berechnet werden,
    (c3) einen Teilschritt des Filterns, während welchem die mehrfache Diffusionskomponente von der einfachen Diffusionskomponente in jeder der Matrizen A1, A2 getrennt wird, und so mindestens zwei gefilterte Matrizen A1$^F$, A2$^F$ erhalten werden, die jeweils den Matrizen A1, A2 entsprechen und jeweils entweder für die einfache Diffusionskomponente oder die mehrfache Diffusionskomponente repräsentativ sind,
    (c4) einen Teilschritt der Datenrotation in der entgegengesetzten Richtung, während welchem eine gefilterte Fenster-Transfermatrix K$^F$(T,f) aus den beiden gefilterten Matrizen A1$^F$, A2$^F$ durch Rotationen in einer zweiten Richtung entgegengesetzt zur ersten Richtung und Extraktion von Elementen der gefilterten Matrizen A1$^F$, A2$^F$ berechnet wird,

    wobei das Verfahren **dadurch gekennzeichnet ist, dass**:

    - während des Schritts der Datenrotation (c2) alle Komponenten der Fenster-Frequenz-Transfermatrix K(T,f) in einem zentralen Teil der einen oder der anderen der beiden Matrizen A1(T,f) und A2(T,f) verteilt werden, wobei diese Matrizen in einem Teil extern von dem zentralen Teil Werte von Null aufweisen, und
    - während des Schritts der Datenrotation (c4) in der entgegengesetzten Richtung alle Nicht-Null-Komponenten der zentralen Teile der gefilterten Matrizen A1$^F$, A2$^F$ extrahiert werden und in die gefilterte Fenster-Transfermatrix K$^F$(T,f) eingesetzt werden.

2. Verfahren nach Anspruch 1, wobei die Fenster-Transfermatrix K(T,f) eine Matrix mit der Dimension N*N ist, wobei N ungerade ist, und während des Datenrotationsschritts (c2) die beiden Matrizen A1(T,f)=[a1$_{uv}$(T,f)] und A2=[a2$_{uv}$(T,f)] aus der Fenster-Frequenz-Transfermatrix K(T,f)=[k$_{ij}$(T,f)] durch die folgenden Beziehungen berechnet werden:

- wenn u+v-(N-1)/2 und v-u+(N+3)/2-1 beide zwischen einschließlich 1 und N liegen,
dann a1$_{uv}$(T,f)=k$_{u+v-(N-1)/2,\ v-u+(N+3)/2-1}$(T,f),
ansonsten a1$_{uv}$(T,f)=0, und
- wenn u+v-1-(N-1)/2 und v-u+(N+3)/2-1 beide zwischen einschließlich 1 und N-1 liegen,
dann a2$_{uv}$(T,f)=k$_{u+v-1-(N-1)/2,\ v-u+(N+3)/2-1}$(T,f),
ansonsten a2$_{uv}$(T,f)=0.

3. Verfahren nach Anspruch 1, wobei der Teilschritt der Datenrotation (c2) umfasst:

- einen ersten Teilschritt (c21), während welchem die Fenster-Frequenz-Transfermatrix K(T,f) in eine erweiterte Matrix Ke(T,f) mit größerer Größe eingesetzt wird, wobei alle anderen Elemente der erweiterten Matrix als jene, die von der Fenster-Frequenz-Transfermatrix stammen, Null sind, und
- einen zweiten Teilschritt (c22), während welchem die beiden Matrizen A1(T,f) und A2(T,f) aus der erweiterten Matrix Ke(T,f) berechnet werden.

4. Verfahren nach Anspruch 3, wobei die Fenster-Transfermatrix K(T,f) eine Matrix mit der Dimension N*N ist, wobei N ungerade ist, und:

- während des ersten Teilschritts (c21) die erweiterte Matrix Ke(T,f)=[ke$_{ij}$(T,f)] definiert wird durch:

$$\text{wenn} \qquad i \in [1+(N-1)/2\ ;\ N+(N-1)/2],\ \text{und}$$
$$j \in [1+(N-1)/2\ ;\ N+(N-1)/2]$$
$$\text{dann } ke_{ij}(T,f) \quad = k_{i-(N-1)/2,\ j-(N-1)/2}(T,f),$$
$$\text{ansonsten} \qquad ke_{ij}(T,f) = 0,\ \text{und}$$

- während des zweiten Teilschritts (c22) die beiden Matrizen A1(T,f)=[a1$_{uv}$(T,f)], A2(T,f)=[a2$_{uv}$(T,f)] aus den folgenden Beziehungen berechnet werden:

$$a1_{uv}(T,f) = ke_{u+v-1,\ v-u+(N+3)/2-1+(N-1)/2}(T,f),$$

und

$$a2_{uv}(T,f) = ke_{u+v,\ v-u+(N+3)/2-1+(N-1)/2}(T,f).$$

5. Verfahren nach einem der Ansprüche 1 bis 4, wobei die Fenster-Transfermatrix K(T,f) eine Matrix mit der Dimension N*N ist, wobei N ungerade ist, und während des Datenrotationsschritts in der entgegengesetzten Richtung (c4) die gefilterte Fenster-Transfermatrix K$^F$(T,f)=[k$^F_{ij}$(T,f)] aus den gefilterten Matrizen A1$^F$(T,f) = [a1$^F_{uv}$(T,f)], A2$^F$(T,f)=[a2$^F_{uv}$(T,f)] durch die folgenden Beziehungen berechnet werden:
wenn i-j gerade ist,

dann     k$^F_{ij}$(T,f)=a1$^F_{(i-j)/2+(N+1)/2,\ (i+j)/2}$, ansonsten k$^F_{ij}$ (T,f)=a2$^F_{(i-j-1)/2+(N+1)/2,\ (i+j-1)/2}$·

6. Verfahren nach einem der Ansprüche 1 bis 5, wobei während des Teilschritts (c1) zur Bestimmung der Fenster-Transfermatrix jede Fenster-Frequenz-Transfermatrix K(T,f) durch Wavelet-Transformation der Zeit-Fenster-Matrix K(T,t) bestimmt wird, die, an dem benachbarten Fenster mit der Zeit T und der Dauer Δt, den Zeit-Antworten h$_{ij}$(t) zwischen Wandlern der Wandlereinheit entspricht.

7. Verfahren nach einem der Ansprüche 1 bis 6, wobei die Zeit-Fenster der verschiedenen Fenster-Transfermatrizen K(T,f) einander mindestens paarweise überlappen.

8. Verfahren nach Anspruch 1, wobei, während des Teilschritts (c3) des Filterns:

- eine einfache Diffusionskomponente $k^s_{ij}(T,f)$ jedes Koeffizienten $k_{ij}(T,f)$ der Matrix K(T,f), wie die einfachen Diffusionskomponenten $K^s_{ij}(T,f)$, an jeder Antidiagonale der Matrix K(T,f) untereinander kohärent sind, und
- eine mehrfache Diffusionskomponente $k^M_{ij}(T,f)$ jedes Koeffizienten $k_{ij}(T,f)$ der Matrix K(T,f) extrahiert wird.

9. Verfahren nach Anspruch 1, wobei während des Emissionsschritts die einfallende Welle, die in ein Medium (1) emittiert wird, unter einem vorherbestimmten Winkel mit einer externen Fläche des Mediums geneigt ist.

10. Vorrichtung zur Durchführung eines Sondierungsverfahrens nach einem der vorhergehenden Ansprüche, umfassend eine Wandlereinheit (3), wobei die Wandler geeignet sind, eine Welle zu emittieren, die in ein Diffusionsmedium (1) einfällt, und Signale zu erfassen, die für eine reflektierte Welle repräsentativ sind, die von dem Medium aus der einfallenden Welle zurückgeworfen wird, wobei die erfassten Signale umfassen:

- eine einfache Diffusionskomponente, die für Wellenbahnen repräsentativ ist, wo die reflektierte Welle aus einer einzelnen Reflexion der einfallenden Welle an jedem Diffusor des Mediums resultiert,
- und gegebenenfalls eine mehrfache Diffusionskomponente, die für Wellenbahnen repräsentativ ist, wo die reflektierte Welle aus mehreren aufeinanderfolgenden Reflexionen der auf die Diffusoren des Mediums einfallenden Welle vor Erreichen der Wandlereinheit resultiert,

wobei die Vorrichtung außerdem Behandlungsmittel (5) umfasst, die geeignet sind, die erfassten Signale zur Bestimmung der Charakteristiken des Mediums (1) zu behandeln,
wobei die Behandlungsmittel (5) geeignet sind, mindestens eine Komponente, die aus der mehrfachen Diffusionskomponente und der einfachen Diffusionskomponente ausgewählt wird, durch Filtern mindestens einer Frequenz-Transfermatrix zu extrahieren, die für Antworten unter Wandlern der Wandlereinheit repräsentativ ist, und die Behandlungsmittel (5) mindestens die folgenden Teilschritte durchführen:

(c1) einen Teilschritt zur Bestimmung der Fenster-Transfermatrix, während welchem mindestens eine Fenster-Frequenz-Transfermatrix K(T,f) bestimmt wird, die einer Zeit-Fenster-Matrix einer Antwort zwischen Elementen K(T,t)=[$k_{ij}(T,t)$] entspricht, wobei die Zeit-Fenster-Matrix der Antwort zwischen Elementen, in einem benachbarten Zeit-Fenster mit einer Zeit T und einer Dauer $\Delta t$, Zeit-Antworten $h_{ij}(t)$ unter Wandlern der Wandlereinheit entspricht, wobei f die Frequenz ist,
(c2) einen Teilschritt der Datenrotation, während welchem zwei Matrizen A1(T,f) und A2(T,f) aus der Fenster-Frequenz-Transfermatrix K(T,f) durch Rotationen in einer ersten Richtung und Extraktion von Komponenten der Fenster-Frequenz-Transfermatrix berechnet werden,
(c3) einen Teilschritt des Filterns, während welchem die mehrfache Diffusionskomponente von der einfachen Diffusionskomponente in jeder der Matrizen A1, A2 getrennt wird, und so mindestens zwei gefilterte Matrizen $A1^F$, $A2^F$ erhalten werden, die jeweils den Matrizen A1, A2 entsprechen und jeweils entweder für die einfache Diffusionskomponente oder die mehrfache Diffusionskomponente repräsentativ sind,
(c4) einen Teilschritt der Datenrotation in der entgegengesetzten Richtung, während welchem eine gefilterte Fenster-Transfermatrix $K^F(T,f)$ aus den beiden gefilterten Matrizen $A1^F$, $A2^F$ durch Rotationen in einer zweiten Richtung entgegengesetzt zur ersten Richtung und Extraktion von Komponenten der gefilterten Matrizen $A1^F$, $A2^F$ berechnet wird,

wobei die Vorrichtung **dadurch gekennzeichnet ist, dass** die Behandlungsmittel (5) geeignet sind, damit:

- während des Schritts der Datenrotation (c2) alle Komponenten der Fenster-Frequenz-Transfermatrix K(T,f) in einem zentralen Teil der einen oder der anderen der beiden Matrizen A1(T,f) und A2(T,f) verteilt werden, wobei diese Matrizen in einem Teil extern von dem zentralen Teil Werte von Null aufweisen, und
- während des Schritts der Datenrotation (c4) in der entgegengesetzten Richtung alle Nicht-Null-Komponenten der zentralen Teile der gefilterten Matrizen $A1^F$, $A2^F$ extrahiert werden und in gefilterte Fenster-Transfermatrix $K^F(T,f)$ eingesetzt werden.

**Claims**

1. **Method for probing by wave propagation** using an assembly (3) of transducers, said method comprising:

   (a) an emitting step during which the assembly (3) of transducers emits an incident wave in a medium (1) which scatters said wave,
   (b) a measuring step during which said assembly (3) of transducers captures signals representative of a reflected wave reverberated by the medium (1) from the incident wave, said captured signals comprising:

   - a simple-scattering component, representative of wave paths where the reflected wave results from a single reflection of the incident wave by each scatterer of the medium,
   - and where appropriate a multiple-scattering component, representative of wave paths where the reflected wave results from multiple successive reflections of the incident wave on the scatterers of the medium before reaching the assembly of transducers,

   (c) a processing step during which said captured signals are processed in order to determine characteristics of the medium, at least one component selected among the multiple-scattering component and the simple-scattering component is extracted by filtering at least one frequency transfer matrix representative of responses between transducers of the assembly of transducers, and which comprises at least the following substeps:

   (c1) a windowed transfer matrix determination substep during which is determined at least one windowed frequency transfer matrix $K(T,f)$ corresponding to a windowed temporal matrix of inter-element response $K[(T,t)]=[k_{ij}(T,t)]$, said windowed temporal matrix of inter-element response corresponding, over a time window close to a time T and of duration $\Delta t$, to the temporal responses $h_{ij}(t)$ between transducers of the assembly of transducers, f being the frequency,
   (c2) a data rotation substep during which two matrices $A1(T,f)$ and $A2(T,f)$ are calculated from the windowed frequency transfer matrix $K(T,f)$, by rotations in a first direction and extraction of elements from the windowed frequency transfer matrix,
   (c3) a filtering substep during which the multiple-scattering component is separated from the simple-scattering component in each of matrices A1, A2, thus obtaining at least two filtered matrices $A1^F$, $A2^F$ respectively corresponding to matrices A1, A2 and each representative of either the simple-scattering component or the multiple-scattering component,
   (c4) a reverse data rotation substep during which a filtered windowed transfer matrix $K^F(T,f)$ is calculated from the two filtered matrices $A1^F$, $A2^F$ by rotations in a second direction opposite the first direction and extraction of elements from the filtered matrices $A1^F$, $A2^F$, said method being **characterized in that:**

   - during the data rotation step (c2), all the elements of the windowed frequency transfer matrix $K(T,f)$ are distributed in a central portion of one or the other of the two matrices $A1(T,f)$ and $A2(T,f)$, these matrices having zeroes in a portion external to the central portion, and
   - during the reverse data rotation step (c4), all non-zero elements of the central portions of the filtered matrices $A1^F$, $A2^F$ are extracted and placed in the filtered windowed transfer matrix $K^F(T,f)$.

2. Method according to claim 1, wherein the windowed transfer matrix $K(T,f)$ is a matrix of size N*N where N is odd, and during the data rotation step (c2) the two matrices $A1(T,f)=[a1_{uv}(T,f)]$ and $A2=[a2_{uv}(T,f)]$ are calculated from the windowed frequency transfer matrix $K(T,f)=[k_{ij}(T,f)]$, by the following relations:

   - if u+v-1-(N-1)/2 and v-u+(N+3)/2-1 are both between 1 and N, inclusive,

   $$\text{then} \quad a1_{uv}(T,f) = k_{u+v-1-(N-1)/2,\ v-u+(N+3)/2-1}(T,f),$$
   $$\text{else} \quad a1_{uv}(T,f) = 0, \text{ and}$$

   - if u+v-(N-1)/2 and v-u+(N+3)/2-1 are both between 1 and N-1, inclusive,

   $$\text{then} \quad a2_{uv}(T,f) = k_{u+v-(N-1)/2,\ v-u+(N+3)/2-1}(T,f),$$
   $$\text{else} \quad a2_{uv}(T,f) = 0.$$

3. Method according to claim 1, wherein the data rotation substep (c2) comprises:

- a first substep (c21) during which the windowed frequency transfer matrix K(T,f) in introduced into an extended matrix Ke(T,f) of greater size, all elements of the extended matrix other than those from the windowed frequency transfer matrix being zero, and
- a second substep (c22) during which the two matrices A1(T,f) and A2(T,f) are calculated from the extended matrix Ke(T,f).

4. Method according to claim 3, wherein the windowed transfer matrix K(T,f) is a matrix of size N*N where N is odd, and:

- during the first substep (c21), the extended matrix $Ke(T,f)=[ke_{ij}(T,f)]$ is defined by:

$$\text{if} \qquad i \in [1+(N-1)/2 \ ; N+(N-1)/2], \text{and}$$
$$j \in [1+(N-1)/2 \ ; N+(N-1)/2]$$
$$\text{then} \qquad ke_{ij}(T,f) = k_{i-(N-1)/2, \ j-(N-1)/2}(T,f),$$
$$\text{else} \qquad ke_{ij}(T,f) = 0, \text{and}$$

- during the second substep (c22), the two matrices $A1(T,f)=[a1_{uv}(T,f)]$, $A2(T,f)=[a2_{uv}(T,f)]$, are calculated by the following relations:

$$a1_{uv}(T,f) = ke_{u+v-1, \ v-u+(N+3)/2-1+(N-1)/2}(T,f),$$

and

$$a2_{uv}(T,f) = ke_{u+v, \ v-u+(N+3)/2-1+(N-1)/2}(T,f).$$

5. Method according to one of claims 1 to 4, wherein the windowed transfer matrix K(T,f) is a matrix of size N*N where N is odd, and during the reverse data rotation step (c4) the filtered windowed transfer matrix $K^F(T,f)= [k^F_{ij}(T,f)]$ is calculated from the filtered matrices $A1^F(T,f)=[a1^F_{uv}(T,f)]$, $A2^F(T,f)=[a2^F_{uv}(T,f)]$ by the following relations:
if i-j is even,

$$\text{then} \qquad k^F_{ij}(T,f) = a1^F_{(i-j)/2+(N+1)/2, \ (i+j)/2},$$
$$\text{else} \qquad k^F_{ij}(T,f) = a2^F_{(i-j-1)/2+(N+1)/2, \ (i+j-1)/2}.$$

6. Method according to one of claims 1 to 5, wherein during the windowed transfer matrix determination substep (c1), each windowed frequency transfer matrix K(T,f) is determined by wavelet transform of the windowed temporal matrix K(T,t) corresponding, over said time window close to time T and of duration $\Delta t$, to the temporal responses $h_{ij}(t)$ between transducers of the assembly of transducers.

7. Method according to any one of claims 1 to 6, wherein the time windows of the various windowed transfer matrices K(T,f) overlap at least pairwise.

8. Method according to claim 1, wherein, during the filtering substep (c3):

- a simple-scattering component $k^s_{ij}(T,f)$ is extracted from each coefficient $k_{ij}(T,f)$ of matrix K(T,f), such that the simple-scattering components $k^s_{ij}(T,f)$ are mutually coherent on each antidiagonal of said matrix K(T,f), and
- a multiple-scattering component $k^M_{ij}(T,f)$ is extracted from each coefficient $k_{ij}(T,f)$ of matrix K(T,f).

9. Method according to claim 1, wherein, during the emitting step, the incident wave emitted in a medium (1) is inclined by a predetermined angle to an outer surface of said medium.

10. **Device for the implementation of a method for probing** according to any one of the preceding claims, comprising an assembly (3) of transducers adapted to emit an incident wave in a scattering medium (1) and to capture signals representative of a reflected wave reverberated by the medium from the incident wave, said captured signals comprising:

- a simple-scattering component, representative of wave paths where the reflected wave results from a single reflection of the incident wave by each scatterer of the medium,
- and where appropriate a multiple-scattering component, representative of wave paths where the reflected wave results from several successive reflections of the incident wave on the scatterers of the medium before reaching the assembly of transducers,

said device further comprising processing means (5) adapted to process said captured signals in order to determine characteristics of the medium (1),

the processing means (5) are adapted to extract at least one component selected among the multiple-scattering component and the simple-scattering component, by filtering at least one frequency transfer matrix representative of the responses between transducers of the assembly of transducers, and the processing means (5) carry out at least the following substeps:

(c1) a windowed transfer matrix determination substep during which is determined at least one windowed frequency transfer matrix $K(T,f)$ corresponding to a windowed temporal matrix of inter-element response $K(T,t)=[k_{ij}(T,t)]$, said windowed temporal matrix of inter-element response corresponding, over a time window close to a time $T$ and of duration $\Delta t$, to the temporal responses $h_{ij}(t)$ between transducers of the assembly of transducers, $f$ being the frequency,

(c2) a data rotation substep during which two matrices $A1(T,f)$ and $A2(T,f)$ are calculated from the windowed frequency transfer matrix $K(T,f)$, by rotations in a first direction and extraction of components of the windowed frequency transfer matrix,

(c3) a filtering substep during which the multiple-scattering component is separated from the simple-scattering component in each of the matrices $A1$, $A2$, thus obtaining at least two filtered matrices $A1^F$, $A2^F$ respectively corresponding to matrices $A1$, $A2$ and each representative of either the simple-scattering component or the multiple-scattering component,

(c4) a reverse data rotation substep during which a filtered windowed transfer matrix $K^F(T,f)$ is calculated from the two filtered matrices $A1^F$, $A2^F$ by rotations in a second direction opposite the first direction and extraction of components from the filtered matrices $A1^F$, $A2^F$,

said device being **characterized in that** the processing means (5) are adapted so that:

- during the data rotation step (c2), all components of the windowed frequency transfer matrix $K(T,f)$ are distributed in a central portion of one or the other of the two matrices $A1(T,f)$ and $A2(T,f)$, these matrices having zeroes in a portion external to the central portion, and
- during the reverse data rotation step (c4), all the non-zero components of the central portions of the filtered matrices $A1^F$, $A2^F$ are extracted and placed in the filtered windowed transfer matrix $K^F(T,f)$.

FIG. 1

FIG. 2

**FIG. 3**

**FIG. 4**

**FIG. 5**

FIG. 6

FIG. 7

$$A^S = \sum_{i=1}^{q-1} \lambda_i \, U_i \, {}^t V_i^*$$

$$A^M = \sum_{i=q}^{M} \lambda_i \, U_i \, {}^t V_i^*$$

FIG. 8

FIG. 9

FIG. 10

**FIG. 11a**

**FIG. 11b**

**FIG. 11c**

FIG. 12

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2010001027 A

- WO 2004086557 A

**Littérature non-brevet citée dans la description**

- **A.M. SENGUPTA ; P.P. MITRA.** Distributions of singular values for some random matrices. *Phys. Rev. E,* 1999, vol. 60 (3), 3389-3392

- Eigenmodes of the time reversal operator : a solution to selective focusing in multiple-target media. **PRADA et al.** Wave Motion. Elsevier Science B.V, 1994, vol. 20, 151-163